(19) Europäisches Patentamt
European Patent Office
Office européen des brevets

(11) **EP 3 156 209 B1**

(12) **EUROPÄISCHE PATENTSCHRIFT**

(45) Veröffentlichungstag und Bekanntmachung des Hinweises auf die Patenterteilung:
**01.05.2019 Patentblatt 2019/18**

(51) Int Cl.:
*B29C 65/00* *(2006.01)*      *B29C 65/02* *(2006.01)*
*C08J 5/12* *(2006.01)*       *C09J 5/02* *(2006.01)*
*C08L 23/14* *(2006.01)*

(21) Anmeldenummer: **15190203.8**

(22) Anmeldetag: **16.10.2015**

(54) **VERFAHREN ZUM SCHWEISSEN EINES POLYOLEFIN-KUNSTSTOFFES MIT EINEM WEITEREN KUNSTSTOFF UNTER VERWENDUNG EINES PRIMERS, GEGENSTAND HERGESTELLT NACH DIESEM VERFAHREN**

METHOD OF WELDING A POLYOLEFIN PLASTIC WITH ANOTHER PLASTIC BY MAKING USE OF A PRIMER, ARTICLE PRODUCED BY SAID METHOD

PROCÉDÉ DE SOUDAGE D'UN PLASTIQUE A BASE DE POLYOLÉFINE AVEC UN AUTRE PLASTIQUE FAISANT USAGE D'UN PRIMAIRE, OBJET PRODUIT PAR LEDIT PROCÉDÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**19.04.2017 Patentblatt 2017/16**

(73) Patentinhaber: **Henkel AG & Co. KGaA**
**40589 Düsseldorf (DE)**

(72) Erfinder:
• **WALTER, Pablo**
**80801 München (DE)**
• **FRIEDRICH, Norman**
**80636 München (DE)**
• **GONZALEZ, Lina**
**82008 München (DE)**
• **LÜTZEN, Hendrik**
**80637 München (DE)**
• **HÄRTIG, Thomas**
**80796 München (DE)**

(56) Entgegenhaltungen:
**DE-A1-102006 054 936**

• Kraton: "Kraton G1652 M Polymer", , 10. August 2009 (2009-08-10), XP055265187, North America Gefunden im Internet: URL:http://docs.kraton.com/pdfDocuments/20 09081010361528162819.PDF [gefunden am 2016-04-13]

**Beschreibung**

Die vorliegende Erfindung bezieht sich auf ein Verfahren zum Verschweißen von einem Polyolefin-Kunststoff mit einem Kunststoff aus einem Polymer mit mindestens einer aromatischen Einheit im Polymergrundgerüst unter Verwendung eines Primers, wobei der Primer mindestens ein Polymer, welches aus mindestens einem Monomer mit mindestens einer Doppelbindung aufgebaut wurde, enthält. Darüber hinaus betrifft die vorliegende Erfindung entsprechend verschweißte Produkte.

Aus dem Stand der Technik sind verschiedene Verfahren bekannt, um zwei oder mehrere Substrate, die aus Kunststoffen, wie zum Beispiel aus Polyethylen (PE), Polyacrylaten oder Polyamid (PA) bestehen, miteinander zu verbinden. Dabei gibt es sowohl mechanische Verbindungsmöglichkeiten, wie beispielsweise das Rasten oder Schrauben, oder Klebeverfahren. Alternativ dazu können Kunststoffe auch miteinander verschweißt werden. Beim Schweißen handelt sich um ein Fügeverfahren für eine nicht lösbare, stofflich physikalische Verbindung im Allgemeinen artgleicher Kunststoffe, wie z.B. PE mit PE oder PA mit PA. Artgleiche thermoplastische Kunststoffe sind solche Polymere, die sich hinsichtlich ihrer Molekularstruktur, ihrer Schmelztemperatur, der Schmelzviskosität und ihres Wärmeausdehnungskoeffizienten nicht wesentlich unterscheiden und grundsätzlich bedingt miteinander mischbar sind. Meistens handelt sich es bei artgleichen Kunststoffen um Kunststoffe einer identischen Polymer-Basis bzw. um identische Kunststoffe.

Es sind verschiedenste Verfahren bekannt, um zwei oder mehrere artgleiche Kunststoffe miteinander zu verschweißen. Dabei können unterschiedlichste Schweißverfahren eingesetzt werden, wie beispielsweise Infrarot-Schweißen, Infrarot/Vibrationsschweißen oder Ultraschallschweißen. Diese Verfahren zum Verschweißen von gleichartigen Kunststoffen basieren darauf, dass die jeweiligen Kunststoffe im Bereich der Schweißzone aufgeschmolzen werden und dass sich die Stoffe in dieser Zone stoff- und kraftschlüssig miteinander verbinden.

Diese Schweißverfahren funktionieren immer so lange gut, solange artgleiche Kunststoffe miteinander verbunden werden sollen. Sobald allerdings zwei Kunststoffe miteinander verschweißt werden sollen, die artungleich bzw. unverträglich miteinander sind, wie zum Beispiel Kunststoffe aus Polypropylen und Polycarbonat, kann keine dauerhafte Verbindung mit hoher mechanischer Festigkeit zwischen den beiden Substraten hergestellt werden. In dem Fall des Versuches eines direkten Verschweißens mit dem aus dem Stand der Technik bekannten Schweißverfahren der beiden Kunststoffe Polypropylen und Polycarbonat oder der beiden Kunststoffe Polypropylen und ABS (Acrylnitril-Butandien-Styrol-Copolymer) werden keine bis sehr geringe Festigkeiten erzielt.

Bisher konnten entsprechende unterschiedliche Kunststoffe lediglich durch eine mechanische Verbindung oder ein Klebeverfahren miteinander verbunden werden. Die Nachteile an einer mechanischen Verbindung sind die komplizierte Anbringung, die punktuelle Materialbelastung als auch die Notwendigkeit eines zusätzlichen mechanischen Verbindungsmittels. Des Weiteren können bei einer mechanischen Verbindung selten stoffschlüssige Verbindungen erreicht werden. Der Nachteil an einem Klebeverfahren ist jedoch, dass die Endfestigkeit der Verbindung erst nach einem langen Zeitraum, der bis zu mehreren Wochen betragen kann, erreicht wird. Des Weiteren erfordert das Verkleben von niederenergetischen Oberflächen meist eine aufwendige Vorbehandlung der Fügepartner. Zusätzlich ist eine Klebeverbindung häufig aufgrund der äußeren Witterung nicht unbegrenzt stabil. Außerdem ist die Bereitstellung einer sauberen Klebeverbindung häufig kompliziert und zeitaufwendig. Somit stellt die Verbindung mittels eines Schweißverfahrens für Kunststoffe die sauberste, schnellste und einfachste Lösung dar.

DE 10 2006 054936 A1 beschreibt ein Verfahren zum Klebeschweißen von zwei thermodynamisch unverträglichen Kunststoffen unter Verwendung eines Klebschweißzusatzstoff, der mit den Kunststoffen mindestens teilweise verträglich oder mit diesen identisch ist. Dabei können die Kunststoffe aus den unterschiedlichsten Stoffklassen ausgesucht werden, wie auch aus Polymethylmethacrylaten oder Polymethylmethimiden.

Die Aufgabe der vorliegenden Erfindung bestand somit darin, ein einfaches Verfahren zum Verschweißen von einem Polyolefin-Kunststoff mit einem Kunststoff ausgewählt aus Polycarbonat-Kunststoffen und Kunststoffen aus vinylaromatischen Polymeren zu finden. Dabei sollte die Verbindung zwischen diesen unterschiedlichen Kunststoffen durch die Schweißnaht möglichst stabil und von Dauer sein.

Überraschenderweise wurde gefunden, dass diese Aufgabe durch ein Verfahren zum Verschweißen von einem Polyolefin-Kunststoff mit einem zweiten Kunststoff enthaltend ein Polymer mit mindestens einer aromatischen Einheit im Polymergrundgerüst, insbesondere ausgewählt aus Polycarbonat-Kunstoffen und Kunststoffen aus vinylaromatischen Polymeren, unter Verwendung eines Primers gelöst wird, wobei der Primer mindestens ein Polymer enthält, welches ausgewählt ist aus der Gruppe von:

- Copolymeren, welche in ihrem Gerüst Maleinsäureanhydrid-Gruppen einreagiert bzw. einpolymerisiert enthalten, insbesondere Maleinsäureanhydrid gepfropfte Polyolefine, bevorzugt Maleinsäureanhydrid gepfropftes Polypropylen,
- halogenierten polyolefinischen Polymeren, vorzugsweise chlorierten Polyethylen- und/oder chlorierte Polypropylen-Polymeren, bevorzugt chloriertes Polypropylen,
- Maleinsäureanhydrid gepfropften, chlorierten polyolefinischen Polymeren, insbesondere Maleinsäureanhydrid gepfropften, chlorierten Polyethylen- und/oder Maleinsäureanhydrid gepfropften, chlorierten Polypropylen-Polymeren, und

- Copolymeren, welche als einpolymerisierte Monomere mindestens ein (Meth)acrylat und mindestens ein Monomer ausgewählt aus einem Styrol oder Styrol-Derivat und mindestens einem weiterem anderen (Meth)acrylat enthalten, insbesondere Coploymere enthaltend, vorzugsweise synthetisiert aus Stearylacrylat und Methylmethacrylat oder Stearylacrylat und Styrol.

Durch die Verwendung eines Primers enthaltend mindestens ein entsprechendes Polymer konnten beim Verschweißen von einem Polyolefin-Kunststoff mit einem Kunststoff ausgewählt aus Polycarbonat-Kunstoffen und Kunststoffen aus vinylaromatischen Polymeren besonders stabile stoffschlüssige Verbindungen zwischen den Kunststoffen erhalten werden.

Der erste Fügepartner zum Verschweißen unter Verwendung eines Primers ist ein Polyolefin-Kunststoff, insbesondere ein thermoplastischer Polyolefin-Kunststoff. Ein Polyolefin-Kunststoff basiert auf polyolefinischen Polymeren, wie Homo- und Copolymere von alpha-Olefinen. Die polyolefinischen Polymere können ausgewählt werden aus der Gruppe bestehend aus Poly-alpha-Olefin-Homopolymeren auf Basis von Ethylen, Propylen und/oder Butylen, insbesondere Homopolymere aus Ethylen oder Propylen, und Poly-alpha-Olefin-Copolymere auf Basis von Ethen, Propen, 1-Buten, 1-Hexen und 1-Octen, insbesondere Ethylen/alpha-Olefin- und Propylen/alpha-Olefin-Copolymere, vorzugsweise Copolymere von Ethylen oder Propen mit 1-Buten, 1-Hexen, 1-Octen, oder einer Kombination davon. Insbesondere sind die Polyolefin-Kunststoffe ausgewählt aus Polyethylen- (insbesondere high-density/HD-Polyethylen-, medium-density/MD-Polyethylen-, lowdensity/LD-Polyethylen-, ultra high molecular weight/UHMW-Polyethylen- und linear lowdensity/LLD-Polyethylen-, vorzugsweise HD-Polyethylen-, MD-Polyethylen- oder LD-Polyethylen-) und Polypropylen-Kunststoffen. Besonders bevorzugt ist der Polyolefin-Kunststoff ein Polypropylen-Kunststoff.

Vorzugsweise haben die Polyolefin-Polymere, insbesondere Polypropylen-Polymere, eine gewichtsmittlere Molmasse (Gewichtsmittel Mw) von größer 10000 g/mol, insbesondere größer 20000 g/mol, bevorzugt größer 50000 g/mol, besonders bevorzugt größer 100000 g/mol. Vorzugsweise weisen die Polyolefin-Polymere, insbesondere Polypropylen-Polymere eine gewichtsmittlere Molmasse (Gewichtsmittel Mw) von kleiner 2000000 g/mol, insbesondere kleiner 1000000 g/mol, bevorzugt kleiner 500000 g/mol auf. Besonders bevorzugte Polyethylen-Polymere weisen eine gewichtsmittlere Molmasse (Gewichtsmittel Mw) von 50000 g/mol bis 1000000 g/mol, insbesondere von 200000 g/mol bis 500000 g/mol auf. Andere bevorzugte Polyethylen-Polymere (UHMW-PE-Polymere) weisen eine gewichtsmittlere Molmasse von größer 2000000 g/mol, insbesondere von 4000000 - 6000000 g/mol auf. Besonders bevorzugte Polyolefin-Polymere, insbesondere Polypropylen-Polymere haben gewichtsmittlere Molmassen (Gewichtsmittel Mw) von 50000 g/mol bis 250000 g/mol.

Die Polyolefin-Kunststoffe, insbesondere Polypropylen-Kunststoffe können auch weitere Komponenten enthalten, z.B. Füllstoffe, wie Glasfasern, Pigmente, Farbstoffe, Rheologiehilfsmittel, Entformungshilfen oder Stabilisatoren. Bevorzugt besteht der Polyolefin-Kunststoff, insbesondere Polyethylen- und/oder Polypropylen-Kunststoff, bevorzugt Polypropylen-Kunststoff zu mehr als 80 Gew.-%, insbesondere zu mehr als 90 Gew.-%, bevorzugt zu mehr als 98 Gew.-% aus den genannten Polyolefin-Polymeren, insbesondere den genannten Polyethylen- und/oder Polypropylen-Polymeren, bevorzugt Polypropylen-Polymeren, jeweils bezogen auf den Polymeranteil des Polyolefin-Kunststoffes (Gesamt Polyolefin-Kunststoff ohne Füllstoffe). Vorzugsweise besteht der Polyolefin-Kunststoff, bevorzugt Polypropylen-Kunststoff zu mehr als 50 Gew.-%, insbesondere zu mehr als 70 Gew.-%, vorzugsweise zu mehr als 90 Gew.-%, bevorzugt zu mehr als 95 Gew.-%, besonders bevorzugt zu mehr als 98 Gew.-% aus dem genannten Polyolefin-Polymeren, insbesondere dem Polypropylen, jeweils bezogen auf den gesamten Polyolefin-Kunststoff (mit Füllstoffen).

Der zweite Fügepartner zum Verschweißen unter Verwendung eines Primers ist ein Kunststoff, der auf einem Polymer mit mindestens einer aromatischen Einheit im Polymergrundgerüst basiert, insbesondere ist der zweite Kunststoff ausgewählt aus Polycarbonat-Kunstoffen, Kunststoffen aus vinylaromatischen Polymeren und Mischungen dieser.

In einer bevorzugten Ausführungsform ist der zweite Kunststoff ein Polycarbonat-Kunststoff. Polycarbonat-Kunststoffe sind vorzugsweise thermoplastische Kunststoffe, die sich formal als Polyester der Kohlensäure beschreiben lassen. Die Herstellung von Polycarbonaten kann prinzipiell durch Polykondensation von Phosgen mit Diolen, bevorzugt Bisphenolen, erfolgen. Bevorzugte Polycarbonate sind aromatische Polycarbonate. Aromatische Polycarbonate sind solche, die mindestens aus einem aromatischen Monomer aufgebaut werden. Bevorzugte Polycarbonat-Kunststoffe sind Bisphenol, insbesondere Bisphenol A und Bisphenol F basierte Polycarbonat-Kunststoffe. Bei den Bisphenol basieren Polycarbonaten besteht bevorzugt die Diol-Komponente zu 50 Gew.-%, insbesondere zu 70 Gew.-%, vorzugsweise zu 90 Gew.-%, bevorzugt zu 100 Gew.-% aus Bisphenol, insbesondere Bisphenol A und/oder Bisphenol.

Die Polycarbonat-Kunststoffe können auch weitere Komponenten enthalten, z.B. Füllstoffe, wie Glasfasern, Pigmente, mineralische Partikel, Farbstoffe, Rheologiehilfsmittel, Entformungshilfen oder Stabilisatoren. Vorzugsweise besteht der Polycarbonat-Kunststoff zu mehr als 40 Gew.-%, insbesondere zu mehr als 60 Gew.-%, vorzugsweise zu mehr als 70 Gew.-%, bevorzugt zu mehr als 90 Gew.-% aus den genannten Polycarbonaten, jeweils bezogen auf den gesamten Polycarbonat-Kunststoff (mit Füllstoffen). Vorzugsweise besteht der Polycarbonat-Kunststoff zu mehr als 90 Gew.-%, insbesondere zu mehr als 95 Gew.-%, bevorzugt zu mehr als 98 Gew.-% aus den genannten Polycarbonaten, jeweils bezogen auf den Polymeranteil des Polycarbonat-Kunststoffes (Gesamt Kunststoff ohne Füllstoffe). Bevorzugt weisen die Polycarbonat-Kunststoffe einen Gehalt an den genannten Polycarbonaten von 50 - 100 Gew.-%, insbesondere 90 - 100 Gew.-% auf, jeweils bezogen auf den gesamten Polycarbonat-Kunststoff (mit Füllstoffen).

In einer anderen bevorzugten Ausführungsform enthält der zweite Kunststoff mindestens ein vinylaromatisches Polymer, insbesondere Copolymer, aus Monomeren ausgewählt aus Styrol, Chlorstyrol, alpha-Methylstyrol und para-Methylstyrol. In untergeordneten Anteilen können die vinylaromatischen Copolymere (vorzugsweise nicht mehr als 20 Gew.-%, insbesondere nicht mehr als 8 Gew.-%) auch Comonomere wie (Meth)acrylnitril oder (Meth)acrylsäureester am Aufbau beteiligt sein. Besonders bevorzugte vinylaromatische Polymere sind Polystyrol, Styrol-Acrylnitril-Copolymere (SAN), Polystyrolmethylmethacrylat (SMMA) und schlagzäh modifiziertes Polystyrol (HIPS = High Impact Polystyrene). Es versteht sich, dass auch Mischungen dieser Polymere eingesetzt werden können.

Ganz besonders bevorzugte vinylaromatische Polymere sind ASA-, ABS- und AES-Polymerisate (ASA = Acrylnitril-Styrol-Acrylester, ABS = Acrylnitril-Butadien-Styrol, AES = Acrylnitril-EPDM-Kautschuk-Styrol). Diese schlagzähen vinylaromatischen Polymere enthalten mindestens ein kautschukelastisches Pfropfpolymerisat und ein thermoplastisches Polymerisat (Matrixpolymerisat). Als Matrixmaterial wird im Allgemeinen auf ein Styrol/Acrylnitril-Polymerisat (SAN) zurückgegriffen. Bevorzugt werden Pfropfpolymerisate verwendet, die als Kautschuk einen Dienkautschuk auf Basis von Dienen wie z. B. Butadien oder Isopren (ABS), einen Alkylacrylatkautschuk auf Basis von Alkylestern der Acrylsäure wie n-Butylacrylat und 2-Ethylhexylacrylat, einen EPDM-Kautschuk auf Basis von Ethylen, Propylen und einem Dien oder Mischungen dieser Kautschuke bzw. Kautschukmonomere enthalten.

Das gewichtsmittlere Molekulargewicht dieser vinylaromatischen Polymere ist insbesondere von 1500 bis 2000000 g/mol, vorzugsweise von 70000 bis 1000000 g/mol.

Der zweite Kunststoff wird besonders bevorzugt ausgewählt aus SMMA-, SAN-, ASA-, ABS- und AES-Kunststoffen, insbesondere ABS-Kunststoffen.

Der zweite Kunststoff enthaltend vinylaromatische Polymere, bevorzugt der SMMA-, SAN-, ASA-, ABS- und AES-Kunststoff, kann auch weitere Komponenten enthalten, z.B. Füllstoffe, wie Glasfasern, Pigmente, mineralische Partikel, Farbstoffe, Rheologiehilfsmittel, Entformungshilfen oder Stabilisatoren. Vorzugsweise besteht der zweite Kunststoff, insbesondere der SAN-, ASA-, ABS- und AES-Kunststoff zu mehr als 40 Gew.-%, insbesondere zu mehr als 60 Gew.-%, vorzugsweise zu mehr als 70 Gew.-%, bevorzugt zu mehr als 90 Gew.-% aus den genannten vinylaromatischen Polymere, jeweils bezogen auf den gesamten Kunststoff (mit Füllstoffen). Vorzugsweise besteht der zweite Kunststoff zu mehr als 90 Gew.-%, insbesondere zu mehr als 95 Gew.-%, bevorzugt zu mehr als 98 Gew.-% aus den genannten vinylaromatische Polymeren, insbesondere SAN-, ASA-, ABS- und/oder AES-Polymeren, jeweils bezogen auf den Polymeranteil des Kunststoffes (Gesamt Kunststoff ohne Füllstoffe). Bevorzugt weist der zweite Kunststoff einen Gehalt an vinylaromatischen Polymeren von 60 - 100 Gew.-%, insbesondere 80 - 100 Gew.-% auf, jeweils bezogen auf den gesamten Kunststoff (mit Füllstoffen).

In einer anderen bevorzugten Ausführungsform enthält der zweite Kunststoff eine Mischung aus mindestens einem Polycarbonat und mindestens einem vinylaromatischen Polymer, bevorzugt den oben erwähnten. Vorzugsweise enthält diese Mischung mehr von einem Polycarbonat als von den vinylaromatischen Polymeren, insbesondere SMMA, SAN, ASA, ABS und/oder AES, vorzugsweise ABS. Bevorzugt ist das Verhältnis vom Polycarbonat, insbesondere vom aromatischen Polycarbonat, zum vinylaromatischen Polymer, insbesondere SMMA, SAN, ASA, ABS und/oder AES, vorzugsweise ABS, 1:1 bis 100:1, insbesondere 2:1 bis 50:1, vorzugsweise 3:1 bis 10:1.

Der zweite Kunststoff enthaltend eine Mischung aus mindestens einem Polycarbonat und mindestens einem vinylaromatischen Polymer kann ebenfalls weitere Komponenten enthalten, z.B. Füllstoffe, wie Glasfasern, Pigmente, mineralische Partikel, Farbstoffe, Rheologiehilfsmittel, Entformungshilfen oder Stabilisatoren. Vorzugsweise besteht der zweite Kunststoff zu mehr als 40 Gew.-%, insbesondere zu mehr als 60 Gew.-%, vorzugsweise zu mehr als 70 Gew.-%, bevorzugt zu mehr als 90 Gew.-% aus der genannten Mischung aus mindestens einem Polycarbonat und mindestens einem vinylaromatischen Polymer, jeweils bezogen auf den gesamten Kunststoff (mit Füllstoffen). Vorzugsweise besteht der zweite Kunststoff zu mehr als 90 Gew.-%, insbesondere zu mehr als 95 Gew.-%, bevorzugt zu mehr als 98 Gew.-% aus der genannten Mischung aus mindestens einem Polycarbonat und mindestens einem vinylaromatischen Polymer, jeweils bezogen auf den Polymeranteil des Kunststoffes (Gesamt Kunststoff ohne Füllstoffe). Bevorzugt weist der zweite Kunststoff einen Polymergehalt aus der Mischung aus mindestens einem Polycarbonat und mindestens einem vinylaromatischen Polymer von 50 - 90 Gew.-%, insbesondere 60 - 80 Gew.-% auf, jeweils bezogen auf den gesamten Kunststoff (mit Füllstoffen).

Ein weiterer wesentlicher Bestandteil der Erfindung ist die Verwendung mindestens eines Primers, vorzugsweise genau eines Primers. Der Primer enthält mindestens ein erstes Polymer, welches aus mindestens einem Monomer mit mindestens einer Doppelbindung aufgebaut wurde, wobei das mindestens eine Polymer ausgewählt ist aus der Gruppe von:

- Copolymeren, welche in ihrem Gerüst Maleinsäureanhydrid-Gruppen einreagiert bzw. einpolymerisiert enthalten, insbesondere Maleinsäureanhydrid gepfropfte Polyolefine, bevorzugt Maleinsäureanhydrid gepfropftes Polypropylen,

- halogenierten polyolefinischen Polymeren, vorzugsweise chlorierten Polyethylen- und/oder chlorierte Polypropylen-Polymeren, bevorzugt chloriertes Polypropylen,

- Maleinsäureanhydrid gepfropften, chlorierten polyolefinischen Polymeren, insbesondere Maleinsäureanhydrid gepfropften, chlorierten Polyethylen- und/oder Maleinsäureanhydrid gepfropften, chlorierten Polypropylen-Polymeren, und

- Copolymeren, welche als einpolymerisierte Monomere mindestens ein (Meth)acrylat und mindestens ein Monomer ausgewählt aus einem Styrol oder Styrol-Derivat und mindestens einem weiterem anderen (Meth)acrylat enthalten, insbesondere Coploymere enthaltend, vorzugsweise synthetisiert aus Stearylacrylat und Methylmethacrylat oder Stearylacrylat und Styrol..

Der Primer stellt ein Schweißhilfsmittel dar, welches vorzugsweise als eine Vorbehandlungsschicht auf mindestens einem der zu verschweißenden Oberflächen der Substrate im Bereich der Fügezone aufgetragen wird. Der Primer ist nicht als Klebstoff, Reinigungsmittel oder ähnliches zu verstehen, vielmehr ist der Primer ein Hilfsmittel zum Schweißen, wodurch die Fügepartner in der Fügezone (bzw. Schweißzone) kompatibel zueinander gemacht werden und so in der Fügezone beim Fügen eine stoff- und kraftschlüssige Verbindung zwischen den zu verschweißenden Substraten entsteht.

Die Versuche haben gezeigt, dass durch die Verwendung eines entsprechenden Primers, enthaltend ein erfindungsgemäßes Polymer, die zu fügenden Kunststoffe beim Schweißen in der Fügenaht kompatibilisiert werden konnten und somit eine stabile und dauerhafte Verbindung erzielt werden kann. Ohne die Verwendung eines entsprechenden Primers konnten keine oder nur sehr geringe Festigkeiten der geschweißten Verbindung erzielt werden. Vorzugsweise weisen die gefügten Substrate eine Zugfestigkeit von mehr als 2 MPa, insbesondere mehr als 5 MPa, bevorzugt mehr als 7 MPa auf. Zugfestigkeit wird mittels einer Zuggeschwindigkeit von 5 mm/s gemäß der in den Versuchen beschriebenen Versuchsdurchführung bestimmt.

Bei dem mindestens einen Polymer handelt es sich um ein Polymer, welches aus mindestens einem Monomer mit mindestens einer Doppelbindung aufgebaut wurde. Dabei wird die Doppelbindung der Monomere, bevorzugt eine Kohlenstoff-Kohlenstoff-Doppelbindung, zum Aufbau der Polymere verwendet, z.B. durch radikalische oder kationische Polymerisation. Die Polymere werden somit unter Verwendung der Doppelbindung der Monomere synthetisiert. Geeignete Monomere sind zum Beispiel alpha-Olefine, Styrol und Styrol-Derivate, (Meth)acrylsäure sowie Derivate davon, wie (Meth)acrylate oder Acrylnitril, und Maleinsäureanhydrid und Derivate davon, sowie Kombinationen davon. Dabei kann das Polymer ein Homopolymer oder Copolymer sein. Bevorzugt ist der Primer jedoch im Wesentlichen frei von Styrol-Isopren-Styrol-Triblockcopolymeren (SIS), Styrol-Butadien-Styrol-Triblockcopolymeren (SBS) und/oder Styrol-Ethylen/Butadien-Styrol-Triblockcopolymeren (SEBS), insbesondere Styrol-Isopren-Blockcopolymeren (SI), Styrol-Butadien-Styrol-Blockcopolymeren (SBS) und/oder Styrol-Ethylen/Butadien-Styrol-Blockcopolymeren (SEBS), vorzugsweise im Wesentlichen frei von Styrol enthaltenden Blockcopolymeren, bevorzugt im Wesentlichen frei von jeglichen Blockcopolymeren, besonders bevorzugt im Wesentlichen frei von jeglichen phasensegregierten Blockcopolymeren. Unter Blockcopolymere werden Polymere verstanden, die aus verschiedenen Segmenten / Blöcken aus unterschiedlichen Monomeren aufgebaut sind, wobei darunter z.B. Diblockcopolymer (AB), Triblockcopolymere (ABA oder ABC) oder auch Multiblockcopolymere ($A_nB_m$) fallen. Unter dem Begriff "im Wesentlichen frei von" wird erfindungsgemäß verstanden, wenn der Primer weniger als 5 Gew.-%, vorzugsweise weniger als 1 Gew.-%, ganz besonders bevorzugt weniger als 0,1 Gew.-% der jeweiligen Substanzen, insbesondere nicht die jeweiligen Substanzen enthalten.

In einer bevorzugten Ausführungsform handelt es sich bei dem mindestens einen Polymer um Polymere, insbesondere Copolymere, welche in ihrem Gerüst Maleinsäureanhydrid-Gruppen einreagiert bzw. einpolymerisiert enthalten. Dabei kann in das Polymer ein Maleinsäureanhydrid bzw. Maleinsäureanhydrid-Derivat, insbesondere Maleinsäureanhydrid einreagiert bzw. einpolymerisiert sein. Ein Beispiel für ein Maleinsäureanhydrid-Derivat ist 1,2,3,6-Tetrahydrophthalsäureanhydrid, welches die relevante 5-gliedige Anhydrid-Gruppe umfasst. Dabei können die Polymere die Maleinsäureanhydrid-Gruppen sowohl im Backbone einpolymerisiert enthalten, wie zum Beispiel in einem Copolymer aus mindestens einem Maleinsäureanhydrid-Monomer und Acrylat- und/oder alpha-Olefin-Monomeren, als auch aufgepfropft enthalten, wie bei Maleinsäureanhydrid gepfropften Polyolefinen. In einer bevorzugten Form ist das Polymer im Primer ein Maleinsäureanhydrid gepfropftes Polyolefin, insbesondere ein Maleinsäureanhydrid gepfropftes Polyethylen und/oder Maleinsäureanhydrid gepfropftes Polypropylen, bevorzugt ein Maleinsäureanhydrid gepfropftes Polypropylen.

In einer anderen besonders bevorzugten Ausführungsform enthält der Primer vorzugsweise ein Copolymer, welches neben dem Maleinsäureanhydrid bzw. Maleinsäureanhydrid-Derivat ein oder mehrere Monomere ausgewählt aus der Gruppe von Acrylaten und Methacrylaten (zusammen (Meth)acrylate), insbesondere (Meth)acrylate mit einem Alkylrest mit 1 bis 12 Kohlenstoffatomen, vorzugsweise 1 bis 4 Kohlenstoffatomen, vorzugsweise Ethyl- und Butyl(meth)acrylat, (Meth)acrylsäure und alpha-Olefinen, insbesondere Ethylen, Propen, 1-Buten, 1-Hexen und 1-Octen, bevorzugt Ethylen einpolymerisiert enthält. Des Weiteren können auch funktionale Monomere mit Funktionalitäten wie beispielsweise Epoxid- oder Isocyanatgruppen, Carboxyl- oder Aminogruppen, aber auch Alkoxysilangruppen, eingesetzt werden. Besonders bevorzugt enthält das mindestens eine Copolymer einpolymerisiert zumindest ein Maleinsäureanhydrid(-Derivat), ein (Meth)acrylat und ein alpha-Olefin, vorzugsweise ein Maleinsäureanhydrid, ein (Meht)acrylat mit einem C1 bis C4 Alkylrest und ein Ethylen oder Propylen.

Die Maleinsäureanhydrid-Guppen enthaltenden Polymere können in bekannter Weise aus den Monomeren synthetisiert werden. Zusätzlich können diese Polymere in einer Polymer-analogen Reaktion gepfropft sein. Besonders bevorzugte Reaktionspartner zum Pfropfen sind Alkohole, Thiole, Amine, Isocyanate, Anhydride, Carbonsäuren, insbesondere Alkohole, bevorzugt Alkohole mit 1 bis 6 Kohlenstoffatomen, wie Methanol und Isobutanol. Zum Pfropfen können die Maleinsäureanhydrid-Monomere bzw. Maleinsäureanhydrid-Einheiten im Polymer mit dem Reaktionspartner reagieren, insbesondere durch Alkohole verestert werden. Vorzugsweise reagieren bzw. verestern die Maleinsäureanhydrid-Gruppen nur partiell, insbesondere weniger als 70 % der Maleinsäureanhydrid-Gruppen. Besonders bevorzugt ist es, wenn die Maleinsäureanhydrid-Gruppen nicht umgesetzt sind und weiterhin als Anhydrid Gruppen vorliegen. In der bevorzugten Ausführung können die Maleinsäureanhydrid-Gruppen auch teilweise hydrolysiert vorliegen. Eine komplette Umsetzung der Maleinsäureanhydrid-Gruppen kann zu einer Verminderung der Festigkeit der resultierenden Schweißverbindung führen.

Besonders vorteilhaft sind Polymere, die einen Maleinsäureanhydrid-Gehalt von größer gleich 0,001 Gew.-%, insbesondere größer gleich 0,01 Gew.-%, bevorzugt größer gleich 0,02 Gew.-%, besonders bevorzugt größer gleich 0,05 Gew.-% bezogen auf das Polymer enthalten. In vorteilhafter Weise enthalten die Polymere einen Maleinsäureanhydrid-Gehalt von 0,01 - 15 Gew.-%, insbesondere 0,02 - 10 Gew.-%, bevorzugt 0,5 - 5 Gew.-% bezogen auf das Polymer. In einer anderen bevorzugten Ausführungsform enthalten die Polymere einen Maleinsäureanhydrid-Gehalt von 2 - 15 Gew.-%, insbesondere 5 - 10 Gew.-%, bezogen auf das Polymer. Polymere mit einem entsprechenden Maleinsäureanhydrid-Gehalt weisen besonders gute Festigkeiten der geschweißten Verbindung auf.

In einer weiteren bevorzugten Ausführungsform können die erfindungsgemäßen Polymere polyolefinische Polymere, wie Homo- und Copolymere von alpha-Olefinen, sein. Die bevorzugten polyolefinischen Polymere können ausgewählt werden aus der Gruppe bestehend aus Poly-alpha-Olefin-Homopolymeren auf Basis von Ethen, Propen und/oder Buten, insbesondere Homopolymere aus Ethylen oder Propylen, und Poly-alpha-Olefin-Copolymere auf Basis von Ethen, Propen, 1-Buten, 1-Hexen und 1-Octen, insbesondere Ethylen/alpha-Olefin- und Propylen/alpha-Olefin-Copolymere, vorzugsweise Copolymere von Ethen oder Propen mit 1-Buten, 1-Hexen, 1-Octen, oder einer Kombination davon.

Die polyolefinischen Polymere können zudem auch funktionalisiert, wie die oben genannten gepfropften Polyolefin-Polymere, oder halogeniert sein. Vorzugsweise liegen die polyolefinischen Polymere in einer halogenierten, insbesondere chlorierten Form vor. Insbesondere bevorzugt sind chlorierte Polyethylen- und/oder chlorierte Polypropylen-Polymere, insbesondere chlorierte Polypropylenpolymere. Die chlorierten Polyolefine, insbesondere die chlorierten Polyethylen- und/oder chlorierten Polypropylen-Polymere weisen vorzugsweise einen Chlorgehalt von größer 5 Gew.-%, insbesondere größer 10 Gew.-%, bevorzugt größer 15 Gew.-% auf. Bevorzugt haben die chlorierten Polyolefine, insbesondere die chlorierten Polyethylen- und/oder chlorierten Polypropylen-Polymere einen Chlorgehalt von 5 bis 42 Gew.-%, insbesondere von 10 bis 40 Gew.-%, bevorzugt von 20 bis 35 Gew.-%.

In einer bevorzugten Ausführungsform sind diese chlorierten Polyolefine, insbesondere die chlorierten Polyethylen- und/oder chlorierten Polypropylen-Polymere in der oben beschriebenen Weise mit Maleinsäureanhydrid gepfropft. Dabei ist auch der oben genannte Gehalt an Maleinsäureanhydrid besonders bevorzugt.

In einer weiteren bevorzugten Ausführungsform können die erfindungsgemäßen Polymere ausgewählt werden aus Copolymeren, welche als einpolymerisierte Monomere mindestens ein (Meth)acrylat und mindestens ein Monomer ausgewählt aus einem Styrol oder Styrol-Derivat und mindestens ein weiteres anderes (Meth)acrylat enthalten. Ein solches Copolymer kann bevorzugt als erstes (Meth)acrylat Monomere ausgewählt aus der Gruppe von Acrylaten und Methacrylaten (zusammen (Meth)acrylate) mit einem Alkylrest mit 1 bis 20 Kohlenstoffatomen, vorzugsweise 10 bis 20 Kohlenstoffatomen, vorzugsweise Stearylacrylat enthalten. Das weitere andere (Meth)acrylat, welches von dem ersten verschieden ist, ist vorzugsweise ausgewählt aus der Gruppe von Acrylaten und Methacrylaten (zusammen (Meth)acrylate) mit einem Alkylrest mit 1 bis 12 Kohlenstoffatomen, vorzugsweise 1 bis 4 Kohlenstoffatomen, vorzugsweise Methyl(meth)acrylat. Neben dem Styrol und (Meth)acrylat kann das Copolymer weitere Monomere enthalten, wie Acrylsäure, unterschiedliche (Meth)acrylat-Monomere, insbesondere (Meth)acrylate mit einem Alkylrest mit 10 bis 20 Kohlenstoffatomen, Acrylnitril, alpha-Olefine oder Diene, wie Butadien. Des Weiteren können auch funktionale Monomere mit Funktionalitäten wie beispielsweise Epoxid- oder Isocyanatgruppen, Carboxyl- oder Aminogruppen, aber auch Alkoxysilangruppen, eingesetzt werden. Besonders bevorzugte Copolymere enthalten oder sind insbesondere synthetisiert aus Stearylacrylat und Methylmethacrylat oder Stearylacrylat und Styrol.

In einer bevorzugten Ausführungsform enthält der Primer Polymere ausgewählt aus der Gruppe aus

- Copolymeren, welche in ihrem Gerüst Maleinsäureanhydrid-Gruppen einreagiert bzw. einpolymerisiert enthalten, insbesondere Maleinsäureanhydrid gepfropfte Polyolefine, bevorzugt Maleinsäureanhydrid gepfropftes Polypropylen,

- polyolefinischen Polymeren, insbesondere halogenierten polyolefinischen Polymeren, vorzugsweise chlorierten Polyethylen- und/oder chlorierten Polypropylen-Polymeren, bevorzugt chloriertes Polypropylen,

- Maleinsäureanhydrid gepfropften, chlorierten polyolefinischen Polymeren, insbesondere Maleinsäureanhydrid gepfropften, chlorierten Polyethylen- und/oder Maleinsäureanhydrid gepfropften, chlorierten Polypropylen-Polymeren, und

- Copolymeren, welche als einpolymerisierte Monomere mindestens ein (Meth)acrylat und mindestens ein Monomer ausgewählt aus einem Styrol oder Styrol-Derivat und mindestens ein weiteres anderes (Meth)acrylat enthalten, insbesondere Coploymere enthaltend, vorzugsweise synthetisiert aus Stearylacrylat und Methylmethacrylat oder Stearylacrylat und Styrol.

Vorteilhafterweise haben die oben genannten Polymere ein gewichtsmittleres Molekulargewicht Mw von größer gleich 5000 g/mol, insbesondere größer gleich 50000 g/mol, bevorzugt größer gleich 100000 g/mol. Bevorzugt haben die Polymere ein gewichtsmittleres Molekulargewicht Mw im Bereich von 5000 - 2000000 g/mol, insbesondere von 50000 - 1000000 g/mol, bevorzugt von 100000 - 500000 g/mol. Polymere mit einem entsprechenden gewichtsmittleren Molekulargewicht wirken sich positiv auf die Sprödität und Festigkeit der erhaltenen Verbindung aus. Das gewichtsmittlere Molekulargewicht kann mittels GPC gegen einen Polystyrol-Standard bestimmt werden.

Neben dem Polymer kann der Primer vorzugsweise mindestens ein weiteres Polymer enthalten. Das mindestens eine weitere Polymer bzw. Copolymer ist vorzugsweise zu mindestens einem der beiden zu verschweißenden Kunststoffe und zum Primer Polymer kompatibel. Besonders bevorzugt enthält der Primer mindestens ein weiteres Polymer, auf welches einer der zu fügenden Kunststoffe basiert, insbesondere ein Polyolefin-Polymer, wie ein PE- und/oder PP- Polymer, und/oder ein vinylaromatisches Polymer, wie SMMA-, SAN-, ASA-, ABS- und/oder AES-Polymer, vorzugsweise jeweils die oben spezifizierten. Die Verwendung eines zusätzlichen Polymers neben dem erfindungsgemäßen (Co)polymer im Primer kann zu einer weiteren Verbesserung der Festigkeit führen.

Als kompatibles weiteres Polymer wird vorzugsweise ein Polymer eingesetzt, welches zu einem, insbesondere zu beiden zu fügenden Kunststoffen und insbesondere auch zu dem oben genannten ersten erfindungsgemäßen Polymer eine gewichtete quadratische Distanz der Hansen-Parameter $(R_a)^2$ von kleiner 22 MPa, insbesondere von kleiner 17 MPa, bevorzugt von kleiner 15 MPa, besonders bevorzugt von kleiner 12 MPa aufweist.

Die gewichtete quadratische Distanz der Hansen-Parameter $(R_a)^2$ bestimmt sich gemäß der folgenden Formel:

$$(R_a)^2 = 4(\Delta\delta_D)^2 + (\Delta\delta_P)^2 + (\Delta\delta_H)^2$$

In dieser Formel ist $\delta_D$ der Hansen-Parameter für die Dispersionskräfte, $\delta_P$ der Hansen-Parameter für die Polarität und $\delta_H$ der Hansen-Parameter für die Wasserstoffbrückenbindungen. $\Delta\delta_D$, $\Delta\delta_P$ und $\Delta\delta_H$ stellen jeweils die Differenzen dieser Hansen-Parameter der zu vergleichenden Kunststoffe bzw. Polymere dar, z.B. $\Delta\delta_D = (\delta_{D1} - \delta_{D2})$ der Polymere 1 und 2. Die Bestimmung der Werte der einzelnen Hansen-Parameter $\delta_D$, $\delta_P$ und $\delta_H$ für die jeweiligen Kunststoffe bzw. Polymere erfolgt gemäß dem Buch "Hansen Solubility Parameters: A User's Handbook" von Charles M. Hansen (second edition; Taylor & Francis Group; 2007; ISBN-10 0-8493-7248-8). Dieser Quelle können bereits viele Werte einzelner Polymere entnommen werden. Gemäß der in diesem Buch beschriebenen Methode können die Hansen-Parameter vorzugsweise mit dem Programm HSPIP (4th Edition 4.1.07) aus der mitgelieferten Datenbank entnommen, oder, falls nicht vorhanden, mit der enthaltenen "DIY" - Funktionalität des Programms, vorzugsweise unter Verwendung des mitgelieferten neuronalen Netzes, wie in der Hilfe beschrieben, bestimmt werden. Das HSPIP Programm ist über die Fa. Steven Abbott TCNF Ltd erhältlich.

Der Gehalt des weiteren Polymeres, insbesondere eines Polyolefin-Polymers und/oder eines vinylaromatischen Polymers, am Primer ist bevorzugt 1 - 40 Gew.-%, insbesondere 5 - 30 Gew.-%, besonders bevorzugt 10 - 20 Gew.-%, jeweils bezogen auf das Gesamtgewicht des Primers. Der Gehalt des weiteren Polymeres am Polymergehalt des Primer ist bevorzugt 5 - 75 Gew.-%, insbesondere 30 - 70 Gew.-%, besonders bevorzugt 40 - 65 Gew.-%, jeweils bezogen auf den Gesamtpolymeranteil des Primers (Primer ohne Lösungsmittel und ohne Füllstoffe).

Neben dem Copolymer und dem weiteren Polymer kann der Primer auch ein Lösungsmittel, insbesondere ein organisches Lösungsmittel enthalten. Vorzugsweise enthält der Primer einen Lösungsmittelgehalt von 10 - 90 Gew.-%, insbesondere 50 - 85 Gew.-%, besonders bevorzugt 60 - 80 Gew.-%, jeweils bezogen auf das Gesamtgewicht des Primers.

Geeignete Lösungsmittel sind alle gängigen Lösungsmittel, wie zum Beispiel Wasser, Alkohole, Ketone, wie Mehylisobutylketon (MIBK) oder Cyclohexanon (CH), Ether, wie Diethylether oder Tetrahydrofuran (THF), Ester, wie Essigsäureethylester, oder Carbonate, wie Dimethyl- oder Dipropylcarbonat, Xylol, Toluol oder Gemische daraus.

In einer bevorzugten Ausführungsform enthält der Primer organische Lösungsmittel. Besonders bevorzugte Lösungsmittel sind Lösungsmittel mit einem Dampfdruck bei 20 °C von 1 bis 600 hPa, insbesondere 2 bis 200 hPa, besonders bevorzugt 5 bis 20 hPa. Lösemittel mit einem entsprechenden Dampfdruck haben sich besonders vorteilhaft dabei herausgestellt, die Blasenbildung in der Primerschicht beim Abdampfen zu minimieren bzw. zu verhindern. Insbesondere bevorzugt enthält der Primer ein Lösungsmittel ausgewählt aus Tetrahydrofuran, Mehylisobutylketon, Cyclohexanon und Gemische daraus, besonders bevorzugt enthält der Primer Tetrahydrofuran oder eine Mischung aus Mehylisobutylketon und Cyclohexanon. Wenn eine Mischung aus Mehylisobutylketon und Cyclohexanon als Lösungsmittel eingesetzt wird, enthält diese Mischung vorzugsweise 10 - 50 Gew.-%, insbesondere 20 - 35 Gew.-% Cyclohexanon, jeweils bezogen auf die gesamte Mischung an Lösungsmittel.

Wenn organische Lösungsmittel eingesetzt werden, beträgt der Gesamtpolymergehalt des Primers vorzugsweise 10 - 90 Gew.-%, insbesondere 15 - 50 Gew.-%, besonders bevorzugt 20 - 40 Gew.-%, jeweils bezogen auf das Gesamtgewicht des Primers. Der Gesamtpolymergehalt entspricht dem Gehalt aller im Primer verwendeten Polymere, insbesondere der erfindungsgemäßen Polymere und der oben beschriebenen weiteren Polymere.

In einer anderen bevorzugten Ausführungsform liegt der Primer in Form einer wässrigen Dispersion oder Emulsion vor. In diesem Fall ist das erfindungsgemäße Polymer bzw., wenn vorhanden, die weiteren Polymere in Wasser emulgiert oder dispergiert. In diesem Fall beträgt der Gesamtpolymergehalt des Primers vorzugsweise 2 - 90 Gew.-%, insbesondere 5 - 50 Gew.-%, besonders bevorzugt 10 - 35 Gew.-%, jeweils bezogen auf das Gesamtgewicht des Primers. Für die wässrige Dispersion/Emulsion ist es vorteilhaft, dass die Polymerkomponente im Wesentlichen nur aus dem erfindungsgemäßen Polymer und dem gegebenenfalls vorhandenen oben genannten weiteren Polymer, insbesondere nur aus dem erfindungsgemäßen Polymer besteht. Unter dem Begriff "im Wesentlichen aus" wird erfindungsgemäß verstanden, wenn die Polymerkomponente zu mehr als 95 Gew.-%, vorzugsweise mehr als 97 Gew.-%, ganz besonders bevorzugt mehr als 99 Gew.-% aus der erfindungsgemäßen Polymer und dem gegebenenfalls vorhandenen oben genannten weiteren Polymer, insbesondere nur aus dem erfindungsgemäßen Polymer besteht.

Neben dem erfindungsgemäßen Polymer, den oben genannten weiteren Polymeren und einem Lösungsmittel kann der Primer weitere Komponenten enthalten, wie zum Beispiel Füllstoffe, (Fluoreszenz)-Farbstoffe und Pigmente, rheologische Hilfsmittel, Entschäumungshilfen, Emulgatoren, Tenside, Benetzungshilfsmittel, Stabilisatoren oder Weichmacher. Abgesehen von Farbstoffen, Pigmenten und Tensiden ist der Primer jedoch vorzugsweise im Wesentlichen frei von weiteren Komponenten, insbesondere im Wesentlichen frei von jeglichen anderen Komponenten. Unter dem Begriff "im Wesentlichen frei von" wird erfindungsgemäß verstanden, wenn der Primer weniger als 5 Gew.-%, vorzugsweise weniger als 1 Gew.-%, ganz besonders bevorzugt weniger als 0,1 Gew.-% der jeweiligen Substanzen, insbesondere nicht die jeweiligen Substanzen enthält.

Bei dem erfindungsgemäßen Verfahren zum Verschweißen von einem Polyolefin-Kunststoff mit einem zweiten Kunststoff aus einem Polymer mit mindestens einer aromatischen Einheit im Polymergrundgerüst wird ein Primer verwendet, wobei der Primer mindestens ein Polymer, welches aus mindestens einem Monomer mit mindestens einer Doppelbindung aufgebaut wurde, enthält.

In einem bevorzugten Verfahren wird zumindest einer der zu fügenden Kunststoffe, insbesondere der zweite Kunststoff, besonders bevorzugt der Polycarbonat-Kunststoff, vor dem Auftrag des Primers mit einer Amin-haltigen Lösung vorbehandelt. Zur Vorbehandlung wird vorzugsweise die zu fügende Oberfläche des Kunststoffes, insbesondere des Polycarbonat-Kunststoffes, vor dem Primer-Auftrag in eine Amin-haltige Lösung getaucht. Vorzugsweise wird der Kunststoff, bzw. die zu fügende Oberfläche für 1 bis 5000 Sekunden, insbesondere für 2 bis 1800 Sekunden in die Amin-haltige Lösung getaucht. Die Amin-haltige Lösung hat vorzugsweise eine Temperatur von 20 bis 80 °C, insbesondere 50 bis 70 °C.

In der Amin-haltigen Lösung liegt ein Amin in einem Lösungsmittel, insbesondere einem organischen Lösungsmittel, bevorzugt einem Alkohol, besonders bevorzugt Ethanol oder Isopropanol vor. Prinzipiell sind alle Amine, insbesondere monomere Amine geeignet. Die Amine werden bevorzugt ausgewählt aus der Gruppe von Diaminen und funktionalisierten Aminen. Besonders bevorzugt sind aliphatische Amine, wie 1-Octylamin, Hexylamin oder Ethylhexylamin, aliphatische Diamine, wie 1,6-Hexamethylenediamin oder Dodecandiamin, cycloaliphatische Diamine, wie Piperazin, N,N'-Dimethylpiperazin oder 2-Piperazin-1-ylethylamin, Mehrfachamine, wie Triethylentetraamin, und funktionalisierte Amine, insbesondere hydroxyfunktionalisierte Amine, wie Ethanolamin. Aber es können auch polymere Amine eingesetzt werden, wie Polyethylenimin, insbesondere mit einem gewichtmittleren Molekulargewicht von 800 bis 2000000 g/mol.

Die Amin-haltige Lösung hat bevorzugt einen Amin-Gehalt von 1 bis 30 Gew.-%, insbesondere 2 bis 20 Gew.-%, bevorzugt 3 bis 10 Gew.-%, jeweils bezogen auf die gesamte Amin-haltige Lösung.

Der Primer dient bei dem erfindungsgemäßen Verfahren als Hilfsmittel für die Verschweißung der beiden unterschiedlichen Kunststoffe durch jeweiliges Aufschmelzen. Durch den verwendeten Primer enthaltend ein erfindungsgemäßes Polymer kann eine Verträglichkeit zwischen den beiden Fügepartnern hergestellt werden, wodurch eine stabile und dauerhafte stoffschlüssige Verbindung zwischen den beiden Kunststoffen hergestellt werden kann.

Der Primer kann durch verschiedenste Verfahren auf die Oberfläche eines oder beider Fügepartner aufgetragen werden. So kann die Auftragung zum Beispiel durch eine Dosiervorrichtung, durch eine Nadel und Dosierroboter, durch Spritzgießen, durch Extrusion, durch Folienauftrag, durch Auftrag als Hotmelt, durch Aufsprühen, durch Aufstreichen oder durch Dippen erfolgen. Dabei kann der Primer entweder nur auf eine Oberfläche oder auf beide Oberflächen der zu verschweißenden Substrate aufgetragen werden

Für den Fall, dass der Primer Lösungsmittel enthält, wird der Primer nach dem Auftrag auf eine oder beide Oberflächen vorzugsweise so lange getrocknet bis das Lösungsmittel soweit verdampft ist, dass eine nicht klebrige, dimensionsstabile Primerschicht entstanden ist. Insbesondere ist der Primer bereits nach wenigen Sekunden und bis zu mehreren Wochen schweißbar. Vorzugsweise wird der Primer nach dem Auftrag für mindestens eine Stunde, bevorzugt für mindestens 12 Stunden getrocknet.

Vorzugsweise erfolgt der Auftrag auf eine oder beide Oberflächen der zu verschweißenden Substrate in der Weise, dass der Primer eine Schichtdicke von 1 $\mu$m bis 5000 $\mu$m, insbesondere 10 - 3000 $\mu$m, bevorzugt 50 - 1000 $\mu$m, besonders bevorzugt 100 - 500 $\mu$m hat. Bevorzugt sind vor allem Schichtdicken von größer 100 $\mu$m. Falls ein Lösungsmittel im Primer enthalten war, bezieht sich die Schichtdicke auf den vom Lösemittel getrockneten Primer.

Nach dem Auftragen auf einen bzw. beide Oberflächen der zu verschweißenden Substrate und gegebenenfalls dem Trocknen des Primers können die zu verschweißenden Substrate mit einem gängigen Schweißverfahren miteinander verbunden werden. Das Schweißen von Kunststoffen erfolgt im Allgemeinen durch eine lokale Plastifizierung der Fügepartner in der Fügeebene und das Fügen unter Druck. Die Prozessparameter sind so zu wählen, dass ein ausgeprägtes Quetschfließen der Schmelze zu einer optimalen Verbindung der Fügepartner in der Fügeebene führt. Die Erwärmung kann über Konvektion, Kontakterwärmung, Strahlung oder Reibung erfolgen. Der unterschiedliche Energieeintrag zum Plastifizieren kann auf vielfältige Art und Weise erfolgen und hat zu verschiedenen Prozessen zum Schweißen von Kunststoffen geführt. Geeignete Schweißverfahren sind beispielsweise:

- Heißgasschweißen [HG](Hot gas welding)
  Konvektive Erwärmung mit einem heißen Gasstrom, im allgemeinen Luft, zweistufiger Prozess
- Heizelementschweißen [HE] (Hot plate welding)
  Kontakterwärmung, zweistufiger Prozess
- Ultraschallschweißen [US] (Ultrasonic welding)
  Erwärmung durch Reibung, eine transversale Welle im Ultraschallbereich führt zu einer Erwärmung in der Grenzschicht, einstufiger Prozess
- Hochfrequenzschweißen [HF] (High frequency welding)
  Erwärmung durch innere Reibung, polare Moleküle orientieren sich entsprechen eines hochfrequenten Magnetfelds, einstufig, nur für polare Kunststoffe und Folien eingesetzt
- Vibrationsschweißen [VIB] (Friction welding: Linear; Orbital; Spin; Angle)
  Erwärmung durch Reibung, einstufiger Prozess
- Laserschweißen [LW] (Laser welding: Kontur, Simultan, Quasisimultan, Maske)
  Erwärmung durch Strahlung, Strahlung kohärent, Lasertransmissionsschweißen, im Allgemeinen einstufig (zweistufig möglich)
- Infrarotschweißen [IR] (Infrared welding)
  Erwärmung über Strahlung, Strahlung inkohärent, zweistufig

Die oben angeführten Schweißverfahren können gegebenenfalls auch kombiniert werden wie zum Beispiel das Infrarotschweißen mit dem Vibrationsschweißen. Besonders bevorzugt erfolgt das Verschweißen der Kunststoffe durch ein Schweißverfahren ausgewählt aus Heizelementschweißen, Wärmekontakt- oder Wärmeimpulsschweißen, Warmgas- oder Heissgasschweißen, Mikrowellen- oder Induktionsschweißen. Laserstumpf- oder Laserdurchstrahlschweißen, Infrarotschweißen, Ultraschallschweißen, sowie Kombinationen daraus, insbesondere ausgewählt aus Infrarotschweißen, Heizelementschweißen, Vibrationsschweißen, Ultraschallschweißen, sowie Kombinationen daraus.

Besonders bevorzugt ist ein Verfahren zum stoffschlüssigen Fügen der zwei Kunststoffe unter Verwendung des Primers, beinhaltend die folgenden Schritte.

- Bereitstellen des ersten Kunsstoffes aufweisend eine erste Fügezone,
- Bereitstellen des zweiten Kunststoffes aufweisend eine zweite Fügezone,
- Vorwärmen der ersten Fügezone,
- Auftragen des Primers auf die vorgewärmte erste Fügezone, insbesondere bei lösungsmittelfreien Primern,
- In-Kontakt-bringen der mit dem Primer versehenen ersten Fügezone mit der zweiten Fügezone,
- Stoffschlüssiges Verbinden der ersten Fügezone mit der zweiten Fügezone insbesondere durch den Einsatz üblicher Schweißverfahren von Kunststoffen wie beispielsweise dem Infrarotschweißen, Heizelementschweißen, Warmgasschweißen, Vibrationsschweißen, Ultraschallschweißen.

Für das Schweißen von Kunststoffen kann allgemein das Verständnis der DIN 1910-3:1977-09 angewendet werden. Mithin kann darunter ein stoffschlüssiges Verbinden von thermoplastischen Kunststoffen unter Zuhilfenahme von Wärme oder/und Druck verstanden werden. Die Erwärmung kann beispielsweise auf Basis von Kontakterwärmung (Schweißen durch festen Körper), Konvektionserwärmung (Schweißen durch Warmgas), Strahlungserwärmung (Schweißen durch Strahl) und Erwärmung durch Reibung (Schweißen durch Bewegung) sowie das Schweißen durch elektrischen Strom erfolgen.

In einer vorteilhaften Weiterbildung kommt ein Primer zum Einsatz, der derart ausgewählt und auf das Verfahren abgestimmt ist, dass das Auftragen auf eine erwärmte und/oder heiße Fügezone mit einer Temperatur, die kleiner ist als die Zersetzungstemperatur der Polymere im Primer, keinen Einfluss auf die innere chemische Vernetzung des Primers hat.

Vorteilhaft ist es, die erste Fügezone des ersten Kunststoffes vorzuwärmen. Für das Vorwärmen können dem Fachmann bekannte und sich für den Einsatzzweck eignende Hilfsmittel und Techniken zum Einsatz kommen. Insbesondere eignet sich der Einsatz von Warmgas oder Plasma zur Vorwärmung. Denkbar ist auch eine Vorwärmung mittels Bestrahlung, insbesondere Infrarotstrahlung oder Laserstrahlung. Auch kann ein Heizelement oder ein beheiztes Werkzeug zum Einsatz kommen, um die erste Fügezone vorzuwärmen. Schließlich ist auch ein Vorwärmen in einem Ofen oder einem beheizten Raum denkbar. Denkbar ist eine Vorwärmung des gesamten Kunststoffes und somit auch besagter Fügezone. Alternativ oder zusätzlich ist aber auch eine Vorwärmung lediglich der Fügezone selbst möglich.

In einer vorteilhaften Weiterbildung liegt der Abstand der Heizvorrichtung während der Vorwärmung zum Kunststoff, insbesondere zur vorzuwärmenden ersten Fügezone, insbesondere des wärmeabgebenden Bereichs der Heizvorrichtung oder des wärmeauslösenden Bereichs der Heizvorrichtung oder der zur vorzuwärmenden wirksamen Oberfläche der Heizvorrichtung oder die hinsichtlich der ersten Fügezone gegenüberliegenden Bereich der Heizvorrichtung in einem Bereich von 0,5 mm bis 100 mm, vorzugsweise im Bereich von 1 mm bis 60 mm. Denkbar ist alternativ auch, dass eine Erwärmung durch und/oder bei Kontaktierung insbesondere der ersten Fügezone durch das Heizelement der Heizvorrichtung erfolgt.

Ein weiterer Vorteil ist die Auswahl des Kunststoffes für den ersten Fügepartner und die Einstellung der Verfahrensparameter auf den ersten Kunststoff derart, dass die erste Fügezone beim Vorwärmen aufgeschmolzen wird und dass beim Vorwärmen eine Schmelzeschicht in der ersten Fügezone erzeugt wird. Die Dicke der Schmelzeschicht liegt in einer bevorzugten Ausführungsform vorzugsweise im Bereich von 0,05 mm bis 6 mm, besonders bevorzugt im Bereich von 0,1 mm bis 5 mm. Eine derartige Schmelzeschicht kann zu einer besseren Adhäsion und/oder Diffusion und/oder Wechselwirkung der Moleküle führen und in Verbindung mit einem gewissen Fluss zu einer besseren Verbindungsschicht. Befindet sich die Grenzschicht des ersten Kunststoffs im schmelzeflüssigen Zustand, kann es mit dem Primer zu Wechselwirkungen bis hin zu chemischen Bindungen kommen. Die Schmelzschicht kann insbesondere abhängig sein von der Bauteilgeometrie und der jeweiligen Bauteilauslegung. Vorzugsweise sind die Verfahrensparameter derart eingestellt und/oder gewählt, dass es zu keiner Verformung der Bauteile kommt. Bevorzugt ist ein Ausgleich von Temperaturunterschieden zwischen der Fügezone und dem aufzutragenden Primer durch geeignete Maßnahmen und/oder Verfahrensschritte vorgesehen. Dabei ist es insbesondere denkbar den Primer vorzuwärmen, um den Temperaturunterschied zwischen dem vorzugsweise thermoplastischen Primer und der ersten Fügezone zu reduzieren. Dies kann beispielsweise der schnellen Abkühlung der ersten Fügezone zwischen den Prozessschritten entgegenwirken.

Optional erfolgt vorzugsweise vor dem Schritt des Vorwärmens der ersten Fügezone eine Vorbehandlung der ersten Fügezone. Alternativ oder zusätzlich kann auch eine Vorbehandlung der zweiten Fügezone erfolgen. Als mögliche Vorbehandlung ist beispielsweise das Reinigen mittels eines Lösungsmittels oder eines beispielsweise alkalischen Kunststoffreinigers denkbar. Auch kann eine mechanische Vorbehandlung zum Einsatz kommen, insbesondere mittels Kratzen, Schmirgeln, Bürsten oder Strahlen. Denkbare chemische Vorbehandlungen sind insbesondere das Beizen oder der Einsatz reaktiver Gase. Darüber hinaus könnte sich der Einsatz einer thermischen, chemischen oder/und physikalischen Vorbehandlung als zweckmäßig erweisen, insbesondere mittels Gasflamme oder Plasmabogen. Alternativ oder zusätzlich kann eine elektrische Vorbehandlung mittels Corona-entladung, bei der die erste Fügezone und/oder die zweite Fügezone einer elektrischen Corona-entladung ausgesetzt wird damit an der entsprechenden Oberfläche polare Moleküle entstehen. Eine weitere Möglichkeit ist die Plasmabehandlung, vorzugsweise unter Einsatz einer Plasmadüse für die Vorbehandlung der Fügezone, insbesondere um eine Aktivierung und/oder Reinigung der entsprechenden Oberfläche zu erreichen. Gleichwohl kann sich auch eine Beschichtung mittels Plasma als zweckmäßig erweisen. Eine weitere Möglichkeit ist das Beflammen der Fügezone zur Erhöhung der Oberflächenspannung bei geeigneten Kunststoffen. Eine weitere Art der Vorbehandlung ist die Bestrahlung mittels UV-Strahlen, Elektronenstrahlen, radioaktiven Strahlen oder mittels Laser. Schließlich kann die Vorbehandlung in Form einer Beschichtung erfolgen, insbesondere durch einen Anstrich oder einen Haftvermittler. Denkbar ist auch eine Vorbehandlung des ersten Kunststoffes oder der Fügezonen des ersten Kunststoffes in einem größeren zeitlichen Abstand vor dem Vorwärmen. So ist beispielsweise denkbar, die Vorbehandlung schon im Rahmen des Fertigungsprozesses des ersten Kunststoffes vorzunehmen, um im erfindungsgemäßen Verfahren den vorbehandelten Kunststoff weiterverarbeiten zu können.

Der Auftrag des Primers ist auf unterschiedliche Art und Weise denkbar. Beispielsweise und insbesondere im industriellen Bereich ist der Auftrag mittels einer automatisierten Auftragshilfe, insbesondere mittels eines Dosierroboters denkbar. Selbiger kann dabei mit einem Nadel und/oder einem Höhensensor ausgerüstet sein, um komplexe Dosierungen durchführen zu können. Auch kann der Auftrag des Primers mittels Spritzgießen erfolgen, indem der Primer in einer Spritzgießmaschine plastifiziert und in die der erste Kunststoff mit der ersten Fügezone enthaltende Form unter Druck eingespritzt wird. Alternativ ist ein Folienauftrag denkbar, wobei in einem ersten Schritt mittels Folienblasen oder Flachfolienextrusion zunächst eine Folie aus dem Primer hergestellt wird. Anschließend kann die Folie beispielsweise mittels eines Schneid- oder Stanzverfahrens in eine beliebige Form zugeschnitten und in einem weiteren Schritt nach dem genannten Vorwärmen auf die erste Fügezone aufgebracht werden. Hierbei hat sich der Einsatz von Folien/Platten mit einer Stärke im Bereich von 1 $\mu$m - 5000 $\mu$m als zweckmäßig erwiesen. Weitere denkbare Auftragsmöglichkeiten sind das Extrusionsschweißen, bei dem der Primer in Form eines Schweißdrahtes vorliegt oder in einem Extruder aufgeschmolzen und in Schmelze auf die erste Fügezone appliziert werden kann. Auch ist die Bereitstellung des Primers in Form eines Schweißdrahtes möglich, um eine Applikation mittels Heißluftschweißen zu ermöglichen. Eine weitere Möglichkeit ist das Aufbringen des Primers mittels eines Sprühverfahrens. Auch beim Aufbringen beim Spritzguss ist eine Vorbehandlung oder/und Vorwärmung und/oder lokal unterschiedliche Temperierung des Spritzgießwerkzeug möglich. Selbstverständlich sind auch andere, dem Fachmann bekannte und sich für den spezifischen Anwendungsfall eignende Auftragsarten denkbar.

Ein weiterer Vorteil ist die weitere Erwärmung oder Erwärmung der ersten Fügezone während des Auftrags des Primers, insbesondere um einen Temperaturabfall der ersten Fügezone zwischen dem Vorwärmen und dem Auftragen des Primers zu vermeiden. Dies kann durch den oben beschriebenen Verfahrensschritt zum Vorwärmen erfolgen, welcher der Einfachheit halber während des Auftrags fortgeführt werden kann. Alternativ oder zusätzlich ist eine zusätzliche Erwärmung insbesondere mittels eines weiteren Verfahrensschrittes möglich. So kann sich beispielsweise als zweckmäßig erweisen, ein simultanes Erwärmen der ersten Fügezone durchzuführen, beispielsweise mittels simultanen Bestrahlens der ersten Fügezone mit Strahlung, erzwungene Konvektion, Kontakterwärmung während des Auftrages, um einen Temperaturabfall der ersten Fügezone nach dem Vorwärmen zu vermeiden.

In einer vorteilhaften Weiterbildung wird der Primer derart aufgebracht, das eine Verbindungsschicht mit einer Dicke im Bereich von 1 $\mu$m bis 5 mm, vorzugsweise im Bereich von 10 $\mu$m bis 3 mm auf der erste Fügezone angeordnet ist. Unter der Dicke der Verbindungsschicht ist dabei die Materialdicke der Verbindungsschicht auf der ersten Fügezone zu verstehen.

Ein weiterer Vorteil ist das Auftragen des Primers mittels einer Dosiervorrichtung auf die erste Fügezone unter Relativbewegung zwischen erster Fügezone und der Dosiervorrichtung, wobei mittels einer Heizvorrichtung die erste Fügezone, auf welche der Primer aufgetragen wird, unter Relativbewegung zwischen erster Fügezone und Heizvorrichtung, vor dem Auftrag des Primers vorgewärmt wird, wobei der Auftrag des Primers über die Dosiervorrichtung im vorgewärmten Zustand der ersten Fügezone erfolgt.
Hierbei hat es sich als besonders vorteilhaft erwiesen, dass die Heizvorrichtung bei der Vorwärmung an der ersten Fügezone mit einer Geschwindigkeit im Bereich von 10 mm/min bis 100 m/min, vorzugsweise im Bereich von 10 mm/min bis 30 m/min vorbeigeführt wird.

Ferner kann es von Vorteil sein, dass die Heizvorrichtung der Dosiervorrichtung vorzugsweise in einem definierten und konstanten Abstand voreilt. Insbesondere ist eine derartige Durchführung des Verfahrens von Vorteil, bei der der Primer mittels einer Dosiervorrichtung auf die erste Fügezone unter Relativbewegung von Dosiervorrichtung und erster Fügezone im Bereich von 10 mm/min bis 100 m/min, vorzugsweise im Bereich von 10 mm/min bis 30 m/min aufgetragen wird, wobei mittels einer Heizvorrichtung besagte Fügezone, auf welche der Primer aufgetragen wird, unter Relativbewegung von Heizvorrichtung und erster Fügezone vor dem Auftrag des Primers vorgewärmt wird, wobei die Heizvorrichtung der Dosiervorrichtung oder einer Düse der Dosiervorrichtung zum Auftragen des Primers in einem zeitlichen Abstand im Bereich von 0,1-10 s vorzugsweise simultan voreilt.

Hierbei hat es sich als besonders vorteilhaft erwiesen, eine Beschichtungseinheit bestehend aus Dosiervorrichtung und Heizvorrichtung einzusetzen. Unter einer Beschichtungseinheit kann dabei insbesondere eine Einheit verstanden werden, die eine feste Verbindung von Heizvorrichtung und Dosiervorrichtung vorsieht, so dass die Heizvorrichtung der Dosiervorrichtung in vorzugsweise einem definierten und konstanten Abstand bei der Relativbewegung voreilt, um sicherzustellen, dass die erste Fügezone unmittelbar vor dem Auftrag des Primers vorgewärmt wird. Selbstverständlich ist hierbei auch eine Einstellbarkeit des Abstandes oder bei konvektiver Vorwärmung das Einstellen des Volumenstroms bzw. Düsendurchmessers des Mediums, insbesondere durch geeignete mechanische, elektromechanische oder auch pneumatisch betriebene Stellmittel denkbar.

Andererseits kann unter der Beschichtungseinheit auch eine Heizvorrichtung und eine Dosiervorrichtung als zwei völlig voneinander getrennte oder separierte Baugruppen verstanden werden, die jedoch die gleiche oder im Wesentlichen die gleiche Relativbewegung hinsichtlich des Kunststoffes eingehen, um sicherzustellen, dass der Auftragsort des Primers unmittelbar vor dem Auftrag des Primers vorgewärmt wird.

In einer vorteilhaften Weiterbildung gehen Heizvorrichtung und Dosiervorrichtung eine zwar im Wesentlichen gleiche primäre Relativbewegung oder Grundrichtung hinsichtlich des Kunststoffes ein, jedoch erfährt zumindest eine von beiden genannten Vorrichtungen zusätzlich zur besagten primären Relativbewegung eine zusätzliche Relativbewegung hinsichtlich des Kunststoffes. So kann beispielsweise die Heizvorrichtung und/oder die Dosiervorrichtung neben der primären Relativbewegung, in der beispielsweise auch der Auftrag des Primers erfolgen kann, eine oder mehrere sekundäre Relativbewegungen eingehen. Beispielsweise kann insbesondere die Heizvorrichtung und/oder die Dosiervorrichtung eine um die primäre Relativbewegung kreisende oder mäanderförmige sekundäre Relativbewegung eingehen oder erfahren.

Dabei kann der Kunststoff auf der einen Seite oder die Heizvorrichtung und Dosiervorrichtung oder beide Vorrichtungen zusammen als Beschichtungseinheit auf der anderen Seite bewegt werden. Dabei ist es möglich, dass die Heizvorrichtung und Dosiervorrichtung oder beide Vorrichtungen zusammen als Beschichtungseinheit auf der einen Seite bzw. der Kunststoff auf der anderen Seite stillstehen oder jeweils mit dem sich bewegenden Teil in abweichende Richtung bewegt werden.

In einer vorteilhaften Weiterbildung erfolgt eine primäre Relativbewegung in einer Geschwindigkeit in einem Bereich von 10 mm/min bis 100 m/min, vorzugsweise im Bereich von 10 mm/min bis 30 m/min, so dass beispielsweise insbesondere auch durch geeignete Gestaltung der Heizvorrichtung möglichst kurze Verweilzeiten des Kunststoffes innerhalb der Heizfläche der Heizvorrichtung ergeben, insbesondere in einem Bereich von 1-60 s. Hierunter kann der Bereich bzw. der Raum um die Heizvorrichtung verstanden werden, der einen Einfluss auf die Temperatur im Sinne einer Temperaturerhöhung, also einer Vorwärmung der ersten Fügezone des ersten Kunststoffes hat. So kann beispielsweise eine zu große Aufheizung und eine Kunststoffschädigung oder Kunststoffbeeinträchtigung vermieden werden.

Zudem kann es sich als vorteilhaft erweisen, insbesondere zur Anbindung der Dosiervorrichtung und/oder der Heizvorrichtung an/in bestehende Fertigungslinien, die Heizvorrichtung mit einer Busschnittstelle auszustatten, insbesondere eines Profibus, oder einer Realtime-Ethernet-Schnittstelle.

Nach dem Aufbringen besagten Primers ist vorgesehen, die zweite Fügezone mit der Primerschicht in Kontakt zu bringen. Hierbei kann sich eine Fixierung beider Kunststoffe zueinander als zweckmäßig erweisen, insbesondere mittels dem Fachmann bekannter Spannvorrichtungen oder ähnlicher Hilfsmittel zur Fixierung.

Natürlich kann optional vor dem Schritt des In-Kontakt-Bringens der zweiten Fügezone mit der Primerschicht eine Vorbehandlung der zweiten Fügezone erfolgen. Dabei sind insbesondere alle oberhalb beschriebenen Techniken für eine Vorbehandlung denkbar. Denkbar ist auch eine Vorbehandlung des zweiten Kunststoffes oder der Fügezonen des zweiten Kunststoffes in einem größeren zeitlichen Abstand vor dem In-Kontakt-Bringen. So ist beispielsweise denkbar, die Vorbehandlung schon im Rahmen des Fertigungsprozesses des zweiten Kunststoffes vorzunehmen, um im erfindungsgemäßen Verfahren einen vorbehandelten Kunststoff weiterverarbeiten zu können. Die Vorbehandlung des zweiten Kunststoffes kann auch den Auftrag des Primers auf die zweite Fügezone beinhalten. Dabei ist vorzugsweise auch eine Vorwärmung der zweiten Fügezone vor dem Auftrag des Primers denkbar. Die obigen Ausführungen sind an dieser Stelle ebenfalls bevorzugt.

Es schließt sich an das oberhalb beschriebene In-Kontankt-bringen von zweiter Fügezone und Primer ein Fügeprozess an, in dem die behandelten und/oder beschichteten Fügepartner durch Wärmezufuhr plastifiziert und vorzugsweise unter Einwirkung von Druck miteinander stoffschlüssig verbunden werden. Denkbar ist für diese stoffschlüssige Verbindung der zweiten Fügezone mit dem Primer der Einsatz einer Wärmezufuhr mittels Wärmeleitung, beispielsweise mittels Heizelementschweissen und/oder Wärmekontaktschweißen und/oder Wärmeimpulsschweißen; durch Reibung, insbesondere Ultraschall-, Reib-/Vibrations- oder Hochfrequenzschweissen; Mikrowellen- oder Induktionsschweißen; durch Konvektion, wie beispielsweise Warmgas- oder Heissgasschweissen; mittels Strahlung, beispielsweise Infrarot-, Laserstumpf- oder Laserdurchstrahlschweissen oder auch durch Kombination zweier oder mehrerer dieser Techniken.

Ein weiterer Gegenstand dieser Erfindung sind gemäß dem erfindungsgemäßen Verfahren hergestellte Gegenstände bzw. Produkte.

Außerdem ist Gegenstand dieser Erfindung die Verwendung eines erfindungsgemäßen Primers zur Verschweißung von einem Polyolefin-Kunststoff mit einem Kunststoff ausgewählt aus Polycarbonat-Kunstoffen und Kunststoffen aus vinylaromatischen Polymeren.

Ausführunqsbeispiele

Eingesetzte Materialien und Abkürzungen:

PP = Polypropylen
PC = Polycarbonat
ABS = Acrylnitril-Butadien-Styrol
MAH = Maleinsäureanhydrid

MIBK = Methylisobutylketon
CH = Cyclohexanon
THF = Tetrahydrofuran
PP-MAH = PP-MAH mit MFR (230°C; 2,16 Kg) = 7-12

Chlorierte/modifizierte Primerpolymere:

Primerpolymer 1 = Polypropylen; 20,5 % Chlorgehalt; MAH modifiziert; Mw = 70000 g/mol
Primerpolymer 2 = Polypropylen; 22 % Chlorgehalt; MAH modifiziert; Mw = 60000 g/mol
Primerpolymer 3 = Polypropylen; 15 % Chlorgehalt; MAH modifiziert; Mw = 110000 g/mol
Primerpolymer 4 = Polypropylen; 32 % Chlorgehalt; Mw = -100000 g/mol
Primerpolymer 5 = Polyolefin; Acrylat- und MAH modifiziert; Mw = 67500 g/mol
IR: Infrarot-Schweißen; IR-VIB: Infrarot/Vibrations-Schweißen; US: Ultraschallschweißen

Heizelementschweißen von PP-PC und PP-ABS mit modifizierten Polyolefinen (Primerpolymere 1-5:

Bei 280°C wurden PP für 20 s und PC für 40 s bzw. ABS für 20 s auf der Fläche von 30 mm x 4 mm auf der Heizplatte aufgeschmolzen, beide zu fügende Kunststoffe in eine Schmelze des Primerpolymers getaucht und die Primer beschichteten Polymere mit leichtem Druck gefügt. Nach 24 Stunden bei Raumtemperatur wurden die geschweißten Proben in einer Zugprüfmaschine mit einer Prüfgeschwindigkeit von 5 mm/s bei Raumtemperatur geprüft. Die Polymerkombinationen und das verwendete Primerpolymer sind mit den zugehörigen Zugfestigkeiten in der nachfolgenden Tabelle dargestellt.

| Polymer 1 | Polymer 2 | Primerpolymer | Zugfestigkeit in MPa |
|---|---|---|---|
| PP Hostacom M4N01 | PC Makrolon AL2447 | 5 | 2,12 |
| | | 1 | 3,34 |
| | | 2 | 3,35 |
| | | 3 | 4,66 |
| | ABS Starex SD0150 | 5 | 5,7 |
| | | 1 | 6,99 |
| | | 2 | 6,39 |
| | | 3 | 7,57 |

Es konnten gute Festigkeiten der geschweißten Proben mit den angegebenen Primerpolymeren erhalten werden. Ohne Primer wiesen die Heizelement geschweißten Proben keine Festigkeit auf und fielen direkt nach dem Schweißen auseinander.

Herstellung der Primer 1-3

Zur Herstellung der Primer wurden die Primerkomponenten durch mechanisches Rühren im Lösungsmittel gemischt, bei 90°C gelöst und im Anschluss bei 25 °C entgast. Die Zusammensetzung der Primer ist aus der folgenden Tabelle in g zu entnehmen.

| | Primer | | |
|---|---|---|---|
| | 1 | 2 | 3 |
| Primerpolymer 4 | 35,00 | 42,00 | 28,00 |
| ABS-TX-0510T | 35,00 | 28,00 | 42,00 |
| Disperbyk-168 | 4,00 | 4,00 | 4,00 |
| THF | 104,00 | 104,00 | 104,00 |

(fortgesetzt)

|  | Primer | | |
|---|---|---|---|
|  | 1 | 2 | 3 |
| CH | 26,00 | 26,00 | 26,00 |

Die Primer wurden bei Raumtemperatur auf die Oberfläche (130 mm x 3 mm) des zu verschweißenden PP-Kunststoffs aufgetragen. Danach wurde der Primer für 24 Stunden bei Raumtemperatur vom Lösemittel getrocknet. Nach dem Trocknen betrug die Dicke des Primer etwa 0,2 mm. Anschließend wurden die vorgetrockneten Kunststoffkomponenten mit einer Geometrie von 130 mm x 68 mm x 3 mm auf Stoß mit der 130 mm x 3 mm Oberfläche verschweißt. Die Zugfestigkeit wurde bei einer Zuggeschwindigkeit von 5 mm/s bei Raumtemperatur bestimmt. In der nachfolgenden Tabelle sind jeweils die Kombination von Primer mit den verwendete Kunststoffen und dem Schweißverfahren und die ermittelten Zugfestigkeiten (in MPa) angegeben.

| Polymer 1 | Polymer 2 | Primer Nr. | Schweißverfahren | Zugfestigkeit MPa |
|---|---|---|---|---|
| PP Moplen HP501L | PC Makrolon AL2447 | 1 | IR | 7,07 |
|  |  |  | IR/VIB | 10,3 |
| PP Moplen HP501L | PC Makrolon AL2447 | 2 | IR | 10,19 |
|  |  |  | IR/VIB | 9,51 |
| PP Moplen HP501L | PC Makrolon AL2447 | 3 | IR | 8,03 |
|  |  |  | IR/VIB | 8,42 |
| PP Hostacom M4N01 | PC Makrolon AL2447 | 1 | IR | 6,32 |
|  |  |  | IR/VIB | 7 |
| PP Hostacom M4N01 | PC Makrolon AL2447 | 2 | IR | 9,94 |
|  |  |  | IR/VIB | 7,09 |
| PP Hostacom M4N01 | PC Makrolon AL2447 | 3 | IR | 7,4 |
|  |  |  | IR/VIB | 8,42 |
| PP Moplen HP501L | PC Makrolon AL2447 | - | IR | 0,2 |
|  |  |  | IR/VIB | 0 |
| PP Hostacom M4N01 | PC Makrolon AL2447 | - | IR | 0,84 |
|  |  |  | IR/VIB | 0 |
| PP weiß, 20% mineralgefüllt | ABS Starex SD0150 | 1 | IR | 12,04 |
|  |  |  | IR/VIB | 12,15 |
| PP weiß, 20% mineralgefüllt | ABS Starex SD0150 | 2 | IR | 9,94 |
|  |  |  | IR/VIB | 7,09 |
| PP weiß, 20% mineralgefüllt | ABS Starex SD0150 | 3 | IR | 6,62 |
|  |  |  | IR/VIB | 7,86 |
| PP weiß, 20% mineralgefüllt | ABS Starex SD0150 | - | IR | 2,63 |
|  |  |  | IR/VIB | 2,63 |

Es wurden ausgezeichnete Festigkeiten der geschweißten PP-PC und PP-ABS Kunststoffe mit Primer erhalten. Ohne Primer wurde nur geringe bzw. keine Festigkeit der geschweißten Kunststoffe erhalten.

Herstellung der Stearylacrylat und Styrol bzw. Methylmethacrylat enthaltenden Copolymere:

Die nachfolgende Tabelle gibt die eingesetzten Monomermengen an in Gramm.

| Primer Polymer Nr. | Stearylacrylat | Styrol | Methylmethacrylat | Dibenzoylperoxid Luperox A75 |
|---|---|---|---|---|
| 6 | 30,2 | - | 20,14 | 0,1045 |
| 7 | 15 | - | 35 | 0,1037 |
| 8 | 16,5 | 38 | - | 0,2078 (in 2 Portionen) |
| 9 | 10 | 40 | - | 0,208 (in 2 Portionen) |

Durch radikalische Polymerisation in Substanz wurden Copolymere aus Stearylacrylat, Styrol und Methylmethacrylat gemäß der vorstehenden Tabelle synthetisiert. Sämtliche Edukte und der Initiator wurden in einen 1L 2-Halskolben eingewogen und im Ölbad unter starkem Rühren mittels Magnetrührer binnen 30 min auf 95°C Ölbadtemperatur geheizt. Nach kurzer Zeit wurde zum Teil eine zweite Portion Initiator zugegeben. Nachdem eine feste Masse entstanden war, wurde für 5 Stunden auf 150°C erhitzt. Nach dem Abkühlen auf 20°C wurden farblose Feststoffe erhalten. Die Primer Polymere Nr. 8 und 9 wurden als 20 Gew.-%ige Lösung in THF durch Rühren im Lösemittel bei 20°C hergestellt und wie zuvor beschrieben auf die Fläche von 130 mm x 3 mm auf PP appliziert und mit PC geschweißt. Die Primer Polymere 6 und 7 wurden als Feststoffe zum Heizelementschweißen wie oben beschrieben verwendet. Verwendet wurde die Fügeteilkombination PP Hostacom M4N01 und PC Makrolon AL2447. Die Zugfestigkeiten bei Raumtemperatur und einer Prüfgeschwindigkeit von 5 mm/s, das verwendete Primer Polymer und das Schweißverfahren sind in der nachfolgenden Tabelle dargestellt.

| Primer Polymer Nr. | Schweißverfahren | Zugfestigkeit MPa |
|---|---|---|
| 6 | Heizelementschweißen | 2,30 |
| 7 | Heizelementschweißen | 1,31 |
| 8 | IR/VIB | 5,08 |
| 9 | IR | 4,96 |

Es konnten gute Festigkeiten der geschweißten Proben mit Primer Polymer erhalten werden.

Aminvorbehandlung von PC:

Die verwendeten Amine und deren Konzentration in Isopropanol sind der nachfolgenden Tabelle zu entnehmen. PC Makrolon AL2447 Platten von 130 mm x 68 mm x 3 mm wurden unter den in der Tabelle angegebenen Bedingungen (Zeit und Temperatur) in die Aminlösung getaucht und anschließend bei Raumtemperatur vom Lösemittelrückstand für 24 Stunden abtrocknen lassen. Mittels Handextruder (Alpha 2; Wegener International GmbH) wurde ein PP-MAH mit einem MFR = 7 - 12(230°C;2,16 Kg) bei 230°C Schmelzetemperatur auf die mit Warmgas bei 280°C für 15 Sekunden vorgewärmten, aminbehandelten PC-Platten extrudiert. Nach 24 Stunden wurde durch abschälen des Extrusionsstranges eine qualitative Beurteilung der Haftung vorgenommen. Die Beurteilung ist ebenfalls der nachfolgenden Tabelle zu entnehmen.

| Konzentration und Amin in Isopropanol | PC Eintauchzeit und -temperatur der Lösung | Qualitative Haftungsbeurteilung |
|---|---|---|
| 3 Gew.-% 1,12-Dodecandiamin | 2 sek; 65°C | 2 |
| 3 Gew.-% 1,12-Dodecandiamin | 10 min; 65°C | 1 |
| 10 Gew.-% 1,12-Dodecandiamin | 10 min; 65°C | 2 |
| 10 Gew.-% 1,12-Dodecandiamin | 30 min; 65°C | 1 |
| 3 Gew.-% 1,6-Hexamethylendiamin | 2 sek; 65°C | 2 |

(fortgesetzt)

| Konzentration und Amin in Isopropanol | PC Eintauchzeit und -temperatur der Lösung | Qualitative Haftungsbeurteilung |
|---|---|---|
| 3 Gew.-% 1,6-Hexamethylendiamin | 10 min; 65°C | 1 |
| 10 Gew.-% 1,6-Hexamethylendiamin | 2 sek; 65°C | 2 |
| 10 Gew.-% 1,6-Hexamethylendiamin | 10 min; 65°C | 2 |
| 3 Gew.-% Ethanolamin | 10 min; 65°C | 3 |
| 3 Gew.-% Ethanolamin | 30 min; 65°C | 2 |
| 10 Gew.-% Ethanolamin | 10 min; 65°C | 2 |
| 3 Gew.-% 2-Piperazin-1-ylethylamin | 2 sek; 20°C | 1 |
| 3 Gew.-% 2-Piperazin-1-ylethylamin | 2 sek; 65°C | 1 |
| 3 Gew.-% 2-Piperazin-1-ylethylamin | 10 min; 65°C | 2 |
| 3 Gew.-% 2-Piperazin-1-ylethylamin | 30 min; 65°C | 2 |
| 10 Gew.-% 2-Piperazin-1-ylethylamin | 2 sek; 20°C | 2 |
| 10 Gew.-% 2-Piperazin-1-ylethylamin | 2 sek; 65°C | 1 |
| 10 Gew.-% 2-Piperazin-1-ylethylamin | 10 min; 65°C | 2 |
| 10 Gew.-% 2-Piperazin-1-ylethylamin | 30 min; 65°C | 2 |
| Ohne Vorbehandlung | - | 3 |
| Isopropanol | 2 sek; 20°C | 3 |

1 = Extrusionsstrang nicht vom PC abschälbar, 2 = Extrusionsstrang mit mittlerer Krafteinwirkung vom PC abschälbar, 3 = Extrusionsstrang trennt sich vom PC ohne signifikante Krafteinwirkung.

Es zeigte sich bei viele Aminvorbehandlungen eine ausgezeichnete Haftung des PP-MAH auf dem PC. Referenzversuche ohne Vorbehandlung bzw. bei Vorbehandlung mit reinem Isopropanol zeigten keine Haftung des Extrusionsstranges auf dem PC.

**Patentansprüche**

1. Verfahren zum Verschweißen von einem Polyolefin-Kunststoff mit einem zweiten Kunststoff enthaltend ein Polymer mit mindestens einer aromatischen Einheit im Polymergrundgerüst unter Verwendung eines Primers, wobei der Primer mindestens eine Polymer enthält, welches ausgewählt ist aus der Gruppe von:

- Copolymeren, welche in ihrem Gerüst Maleinsäureanhydrid-Gruppen einreagiert bzw. einpolymerisiert enthalten, insbesondere Maleinsäureanhydrid gepfropfte Polyolefine, bevorzugt Maleinsäureanhydrid gepfropftes Polypropylen,
- halogenierten polyolefinischen Polymeren, vorzugsweise chlorierten Polyethylen- und/oder chlorierte Polypropylen-Polymeren, bevorzugt chloriertes Polypropylen,

- Maleinsäureanhydrid gepfropften, chlorierten polyolefinischen Polymeren, insbesondere Maleinsäureanhydrid gepfropften, chlorierten Polyethylen- und/oder Maleinsäureanhydrid gepfropften, chlorierten Polypropylen-Polymeren, und

- Copolymeren, welche als einpolymerisierte Monomere mindestens ein (Meth)acrylat und mindestens ein Monomer ausgewählt aus einem Styrol oder Styrol-Derivat und mindestens einem weiterem anderen (Meth)acrylat enthalten, insbesondere Coploymere enthaltend, vorzugsweise synthetisiert aus Stearylacrylat und Methylmethacrylat oder Stearylacrylat und Styrol.

2. Verfahren zum Verschweißen nach Anspruch 1, **dadurch gekennzeichnet, dass** der Polyolefin-Kunststoff ausgewählt wird aus der Gruppen von Polyethylen-Kunststoff, insbesondere HD-Polyethylen-, MD-Polyethylen-, LD-Polyethylen-, UHMW-Polyethylen- oder LLD-Polyethylen-Kunststoff, und Polypropylen-Kunststoff, bevorzugt ein Polypropylen-Kunststoff ist.

3. Verfahren zum Verschweißen nach Anspruch 1 oder 2, **dadurch gekennzeichnet, dass** der Polyolefin-Kunststoff zu mehr als 90 Gew.-% ein Polyolefin-Polymer, insbesondere ein Polyethylen und/oder Polypropylen, jeweils bezogen auf den gesamten Polyolefin-Kunststoff enthält und/oder der Polyolefin-Kunststoff Molmassen (Gewichtsmittel Mw) von größer 10000 g/mol aufweist.

4. Verfahren zum Verschweißen nach einem der Ansprüche 1 bis 3, **dadurch gekennzeichnet, dass** der zweite Kunststoff ausgewählt wird aus Polycarbonat-Kunstoffen und Kunststoffen aus vinylaromatischen Polymeren, insbesondere der zweite Kunststoff ein Polycarbonat-Kunststoff aus einem Bisphenol, insbesondere Bisphenol A und/oder Bisphenol F enthaltenden Polymer ist oder der zweite Kunststoffe ausgewählt wird aus SMMA-, SAN-, ASA-, ABS- und AES-Kunststoffen, insbesondere ein ABS-Kunststoff ist oder der zweite Kunststoff aus einer Mischung von einem Polycarbonat und einem vinylaromatischen Polymer ist.

5. Verfahren zum Verschweißen nach einem der Ansprüche 1 bis 4, **dadurch gekennzeichnet, dass** das mindestens eine Polymer ein gewichtsmittleres Molekulargewicht Mw im Bereich von 5000 - 2000000 g/mol, insbesondere von 50000 - 1000000 g/mol, bevorzugt von 100000 - 500000 g/mol aufweist.

6. Verfahren zum Verschweißen nach einem der Ansprüche 1 bis 5, **dadurch gekennzeichnet, dass** der Primer neben dem Polymer, welches aus mindestens einem Monomer mit mindestens einer Doppelbindung aufgebaut wurde, mindestens ein weiteres Polymer enthält, welches zu mindestens einem der beiden zu verschweißenden Kunststoffen kompatibel ist, bevorzugt mindestens ein Polyolefin-Polymere, wie ein PE- und/oder PP- Polymer, und/oder mindestens ein vinylaromatisches Polymer, wie ein SMMA-, SAN-, ASA-, ABS- und/oder AES-Polymer.

7. Verfahren zum Verschweißen nach einem der Ansprüche 1 bis 6, **dadurch gekennzeichnet, dass** der Primer mindestens ein Lösungsmittel, insbesondere mindestens ein organisches Lösungsmittel enthält, wobei der Primer vorzugsweise einen Lösungsmittelgehalt von 10 - 95 Gew.-%, insbesondere 50 - 90 Gew.-%, besonders bevorzugt 70 - 85 Gew.-%, jeweils bezogen auf das Gesamtgewicht des Primers, aufweist.

8. Verfahren zum Verschweißen gemäß Anspruch 7, **dadurch gekennzeichnet, dass** das mindestens eine Lösungsmittel einen Dampfdruck bei 20 °C von 1 bis 600 hPa, insbesondere 2 bis 200 hPa, besonders bevorzugt 5 bis 20 hPa aufweist, vorzugsweise das Lösungsmittel ausgewählt ist aus der Gruppe aus Tetrahydrofuran, Mehylisobutylketon, Cyclohexanon und Gemische daraus.

9. Gegenstand hergestellt nach einem Verfahren zum Verschweißen gemäß einem der Ansprüche 1-8.

10. Verwendung eines Primers, wie in einem der Ansprüche 1-8 charakterisiert, zur Verschweißung von einem Polyolefin-Kunststoff mit einem zweiten Kunststoff ausgewählt aus Polycarbonat-Kunstoffen und Kunststoffen aus vinylaromatischen Polymeren.

**Claims**

1. A method for welding a polyolefin plastics material to a second plastics material containing a polymer having at least one aromatic unit in the polymer backbone using a primer, wherein the primer contains at least one polymer selected from the group of:

- copolymers which contain maleic anhydride groups reacted or polymerized into their backbone, in particular maleic anhydride grafted polyolefins, preferably maleic anhydride grafted polypropylene,
- halogenated polyolefinic polymers, preferably chlorinated polyethylene and/or chlorinated polypropylene polymers, preferably chlorinated polypropylene,
- maleic anhydride grafted, chlorinated polyolefinic polymers, in particular maleic anhydride grafted, chlorinated polyethylene and/or maleic anhydride grafted, chlorinated polypropylene polymers, and
- copolymers which contain, as polymerized monomers, at least one (meth)acrylate and at least one monomer selected from a styrene or styrene derivative and at least one other (meth)acrylate, in particular copolymers which contain, or are preferably synthesized from, stearyl acrylate and methyl methacrylate or stearyl acrylate and styrene.

2. The welding method according to claim 1, **characterized in that** the polyolefin plastics material is selected from the groups of polyethylene plastics material, in particular HD polyethylene, MD polyethylene, LD polyethylene, UHMW polyethylene or LLD polyethylene plastics material, and polypropylene plastics material, and is preferably a polypropylene plastics material.

3. The welding method according to claim 1 or 2, **characterized in that** the polyolefin plastics material contains a polyolefin polymer, in particular a polyethylene and/or polypropylene, in an amount of greater than 90 wt.%, in each case based on the total polyolefin plastics material, and/or the polyolefin plastics material has molar masses (weight average Mw) of greater than 10,000 g/mol.

4. The welding method according to one of claims 1 to 3, **characterized in that** the second plastics material is selected from polycarbonate plastics materials and plastics materials consisting of vinyl aromatic polymers, and the second plastics material is in particular a polycarbonate plastics material consisting of a polymer containing bisphenol, in particular bisphenol A and/or bisphenol F, or the second plastics material is selected from SMMA, SAN, ASA, ABS and AES plastics materials, and is in particular an ABS plastics material, or the second plastics material is a mixture of a polycarbonate and a vinyl aromatic polymer.

5. The welding method according to one of claims 1 to 4, **characterized in that** the at least one polymer has a weight-average molecular weight Mw in the range of between 5,000 and 2,000,000 g/mol, in particular between 50,000 and 1,000,000 g/mol, preferably between 100,000 and 500,000 g/mol.

6. The welding method according to one of claims 1 to 5, **characterized in that** the primer contains, in addition to the polymer formed from at least one monomer having at least one double bond, at least one further polymer which is compatible with at least one of the two plastics materials to be welded, preferably at least one polyolefin polymer, such as a PE and/or PP polymer, and/or at least one vinyl aromatic polymer, such as a SMMA, SAN, ASA, ABS and/or AES polymer.

7. The welding method according to one of claims 1 to 6, **characterized in that** the primer contains at least one solvent, in particular at least one organic solvent, the primer preferably having a solvent content of between 10 and 95 wt.%, in particular between 50 and 90 wt.%, particularly preferably between 70 and 85 wt.%, based in each case on the total weight of the primer.

8. The welding method according to claim 7, **characterized in that** the at least one solvent has a vapor pressure at 20 °C of from 1 to 600 hPa, in particular from 2 to 200 hPa, particularly preferably from 5 to 20 hPa, and the solvent is preferably selected from the group of tetrahydrofuran, methyl isobutyl ketone, cyclohexanone and mixtures thereof.

9. An object produced using a welding method according to one of claims 1-8.

10. The use of a primer, as **characterized in** one of claims 1-8, for welding a polyolefin plastics material to a second plastics material selected from polycarbonate plastics materials and plastics materials consisting of vinyl aromatic polymers.

**Revendications**

1. Procédé de soudage d'un plastique polyoléfine à une seconde matière plastique comprenant un polymère ayant au moins un fragment aromatique dans le squelette du polymère à l'aide d'un apprêt, ledit apprêt contient au moins un polymère choisi dans le groupe constitué de :

- copolymères contenant des groupes anhydride maléique qui ont réagi ou qui ont été polymérisés dans leur squelette, en particulier des polyoléfines greffées d'anhydride maléique, de préférence du polypropylène greffé d'anhydride maléique ;
- polymères polyoléfiniques halogénés, de préférence du polyéthylène chloré et/ou des polymères de polypropylène chloré, de préférence du polypropylène chloré ;
- polymères polyoléfiniques chlorés greffés d'anhydride maléique, en particulier du polyéthylène chloré et greffé d'anhydride maléique et/ou des polymères de polypropylène chlorés et greffés d'anhydride maléique, et ;
- copolymères qui contiennent, comme monomères polymérisés, au moins un (méth)acrylate et au moins un monomère choisi parmi un styrène ou un dérivé du styrène et au moins un autre (méth)acrylate, en particulier contenant des copolymères, de préférence synthétisés à partir d'acrylate de stéaryle et de méthacrylate de méthyle ou d'acrylate de stéaryle et de styrène.

2. Procédé de soudage selon la revendication 1, **caractérisée en ce que** le plastique polyoléfine est choisi parmi les groupes de plastiques polyéthylènes, en particulier le polyéthylène HD, le polyéthylène MD, le polyéthylène LD, le polyéthylène UHMW ou le polyéthylène plastique LLD, et le plastique polypropylène, de préférence un plastique polypropylène.

3. Procédé de soudage selon la revendication 1 ou 2, **caractérisée en ce que** le plastique polyoléfine contient plus de 90 % de polymère polyoléfine, en particulier de polyéthylène et/ou de polypropylène, dans tous les cas par rapport au plastique polyoléfine total, et/ou le plastique polyoléfine présente des masses molaires (moyenne Mw) supérieures à 10 000 g/mol.

4. Procédé de soudage selon l'une des revendications 1 à 3, **caractérisée en ce que** le deuxième plastique est choisi parmi les plastiques polycarbonates et les plastiques de polymères vinylaromatiques, en particulier où le deuxième plastique est un plastique polycarbonate d'un polymère contenant du bisphénol, en particulier du bisphénol A et/ou du bisphénol F, ou le deuxième plastique est choisi parmi les plastiques SMMA, SAN, ASA, ABS et AES, en particulier où un plastique ABS ou le deuxième plastique est un mélange d'un polycarbonate et d'un polymère vinylaromatique.

5. Procédé de soudage selon l'une des revendications 1 à 4, **caractérisée en ce que** l'au moins un polymère a une masse moléculaire moyenne Mw comprise entre 5 000 et 2 000 000 g/mol, en particulier entre 50 000 et 1 000 000 g/mol, de préférence entre 100 000 et 500 000 g/mol.

6. Procédé de soudage selon l'une des revendications 1 à 5, **caractérisée en ce que** l'apprêt contient, outre le polymère constitué d'au moins un monomère ayant au moins une double liaison, au moins un autre polymère compatible avec au moins l'un des deux plastiques à souder, de préférence au moins un polymère de polyoléfine, tel qu'un polymère PE et/ou PP, et/ou au moins un polymère vinylaromatique, tel qu'un polymère SMMA, SAN, ASA, ABS et/ou AES.

7. Procédé de soudage selon l'une des revendications 1 à 6, **caractérisée en ce que** l'apprêt contient au moins un solvant, en particulier au moins un solvant organique, dans lequel l'apprêt a de préférence une teneur en solvant de 10 à 95 %, en particulier 50 à 90 %, en particulier de préférence 70 à 85 %, respectivement en fonction de la masse totale de l'apprêt.

8. Procédé de soudage selon la revendication 7, **caractérisée en ce que** l'au moins un solvant présente une pression de vapeur à 20 °C de 1 à 600 hPa, en particulier de 2 à 200 hPa, en particulier de préférence de 5 à 20 hPa, de préférence où le solvant est choisi dans le groupe constitué par le tétrahydrofurane, la méthylisobutylcétone, le cyclohexanone et leurs mélanges.

9. Objet fabriqué selon procédé de soudage conformément à l'une des revendications 1-8.

10. Utilisation d'un apprêt tel qu'il est caractérisé dans l'une des revendications 1-8 pour le soudage d'un plastique polyoléfine à une seconde matière plastique choisie parmi les plastiques polycarbonates et les plastiques de polymères vinylaromatiques.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

• DE 102006054936 A1

**In der Beschreibung aufgeführte Nicht-Patentliteratur**

• **CHARLES M. HANSEN.** Hansen Solubility Parameters: A User's Handbook. Taylor & Francis Group, 2007

• Methode können die Hansen-Parameter vorzugsweise mit dem Programm HSPIP. 4.1.07